# EUROPEAN PATENT APPLICATION

(11) **EP 1 469 471 A2**
(43) Date of publication of application: **20.10.2004**
(21) Application number: 04007968.3
(22) Date of filing: 01.04.2004
(51) Int. Cl.: G11B 20/02, G11B 20/24, G11B 27/02

(54) **Information processing apparatus for detecting inter-track boundaries**

(30) Priority: 14.04.2003 JP 2003109645
(71) Applicant: SONY CORPORATION, Tokyo (JP)
(72) Inventor: Morita, Toshihiro, Shinagawa-ku Tokyo (JP); Shimoyoshi, Osamu, Shinagawa-ku Tokyo (JP); Hatanaka, Mitsuyuki, Shinagawa-ku Tokyo (JP); Nomura, Masanori, Shinagawa-ku Tokyo (JP); Ando, Akira, Shinagawa-ku Tokyo (JP); Aida, Kiyoshi, Shinagawa-ku Tokyo (JP); Onda, Tomohiro, Shinagawa-ku Tokyo (JP)
(74) Representative: Rupp, Christian, Dipl.Phys.

(57) **Abstract**

The present invention is designed to be capable of increasing the accuracy of detecting inter-track boundaries of music of a plurality of tracks based on analog audio signals. The present invention is capable of increasing the accuracy of detecting the inter-track boundaries of music of a plurality of tracks based on analog audio signals in the manner that noise eliminated audio data D11 is generated by performing a noise eliminating process to audio data generated by digitally converting analog audio signals of music whose inter-track boundaries of a plurality of tracks are produced of silent portions, and based on portions of the generated noise eliminated audio data D11 whose signal levels are lower than a predetermined level threshold value, presumed inter-track boundaries presumed to be the inter-track boundaries for a plurality of tracks are detected, and again based on the inter-track boundaries specifying information inter-track boundaries are specified out of the detected presumed inter-track boundaries, whereby it is made possible to properly detect the inter-track boundaries of silent portions of music of a plurality of tracks based on the analog audio signals keeping the influence of noise to a minimum.

## Description

### BACKGROUND OF THE INVENTION

### FIELD OF THE INVENTION

The present invention relates to an information processing apparatus for detecting inter-track boundaries and is preferably applied to personal computers performing recording and reproducing processes to analog audio signals of music reproduced off from analog recording media such as records and cassette tapes with the use of external analog audio equipment such as record players and tape recorders, for example.

### DESCRIPTION OF THE RELATED ART

With conventional personal computers audio data is generated by digitally converting analog audio signals to be recorded, which are supplied from analog audio equipment, and the generated audio data is recorded on the internal hard disks, etc. (For example, non-patent document 1 http://www.Japan.steinberg.net/products/clean4/img/example.jp)

With such personal computers as configured above, in recording on the hard disk audio data corresponding to analog audio signals to be recorded, according to a program called CLEAN of Steinberg, after the noise peculiar to analog audio contained in the audio data is removed, the recording and reproducing of the audio data is managed by the unit of a track (a piece of music) by automatically detecting inter-track boundaries of silent portions of a plurality of tracks of music on the basis of the audio data.

Such personal computers, however, are supplied with analog audio signals to be recorded that contain a plenty of noise dubbed crackling noise (reproduced as noise sounding like crackling in music) - the result ensuing from reproducing a plurality of tracks of music on old records with a record player, for example, which has consequently posed a problem that it is hard to properly detect inter-track boundaries unless the noise present in the silent portions of inter-track boundaries is properly eliminated because it is too big against the audio data corresponding to the analog audio signals.

### SUMMARY OF THE INVENTION

In view of the foregoing, an object of this invention is to provide an information processing apparatus for detecting inter-track boundaries, which is capable of enhancing the accuracy of detecting inter-track boundaries of a plurality of tracks of music on the basis of analog audio signals.

In order to solve such problems the present invention is designed to comprise noise eliminating means for generating noise eliminating audio data by performing a noise eliminating process to audio data generated by digitally converting analog audio signals of music of which inter-track boundaries of a plurality of tracks are produced of silent portions; presumed inter-track boundaries detecting means for detecting inter-track boundaries presumed to be the inter-track boundaries of a plurality of tracks based on the portions of the noise eliminated audio data whose signal levels are lower than a predetermined level threshold value; and inter-track boundaries specifying means for specifying inter-track boundaries based on the inter-track boundaries specifying information out of the presumed inter-track boundaries detected by the presumed inter-track boundaries detecting means.

Accordingly, the inter-track boundaries produced of silent portions of a plurality of tracks of music based on the analog audio signals can be properly detected with the influence of noise kept to a minimum.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a schematic diagram showing the total configuration of a personal computer;
Fig. 2 is a block diagram showing the configuration of the main unit of a personal computer;
Fig. 3 is a block diagram showing the configuration of a record edit managing program;
Fig. 4 is a descriptive example of a project file;
Fig. 5 is the list of tags used in a project file;
Fig. 6 is a flowchart showing the record edit managing procedure;
Fig. 7 is a schematic diagram showing an opening screen;
Fig. 8 is a schematic diagram showing an input selection screen;
Fig. 9 is a schematic diagram showing a record edit screen;
Fig. 10 is a schematic diagram showing the structure of a track panel;
Figs. 11A to 11C are schematic diagrams showing the states of the dividing of tracks;
Fig. 12 is a schematic diagram showing a track panel with dividing positions fixed;
Fig. 13 is a schematic diagram showing an output selection screen;
Fig. 14 is a flowchart showing a recording procedure;
Fig. 15 is a flowchart showing an inter-track boundaries specifying procedure using inter-track boundaries specifying input information;
Fig. 16 is a flowchart showing an inter-track boundaries detecting procedure;
Figs. 17A and 17B are schematic diagrams used in explaining noise elimination in respect to copy audio data;
Fig. 18 is a flowchart showing an inter-track boundaries specifying information acquisitive procedure;
Fig. 19 is a flowchart showing an inter-track boundaries specifying procedure using inter-track boundaries specifying acquisitive information;
Fig. 20 is a flowchart showing a final inter-track boundaries specifying procedure using inter-track boundaries specifying input information;
Fig. 21 is a flowchart showing an inter-track boundaries detecting retry procedure;
Fig. 22 is a flowchart showing an inter-track boundaries detecting retry procedure using inter-track boundaries specifying input information;
Fig. 23 is a flowchart showing a final inter-track boundaries specifying procedure using an inter-track boundaries specifying acquisitive information;
Fig. 24 is a flowchart showing an inter-track boundaries specifying retry procedure using inter-track boundaries specifying acquisitive information; and
Fig. 25 is a schematic diagram used in explaining reliability levels according to error values in playing time.

### DETAILED DESCRIPTION OF THE EMBODIMENT

Preferred embodiments of this invention will be described with reference to the accompanying drawings:

### (1) Overall Configuration of Personal Computer

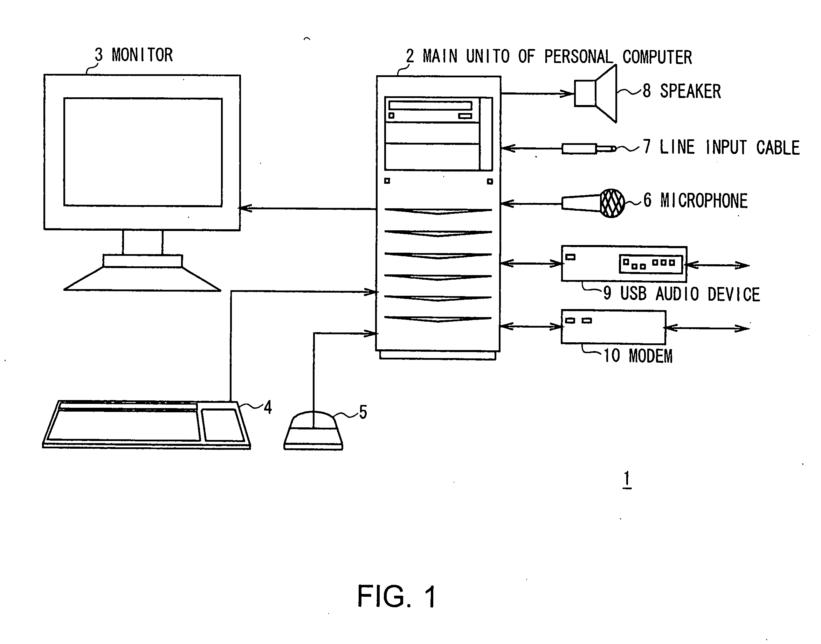

In Fig. 1 the reference numeral 1 shows a personal computer as a whole, which the present invention is applied to, and connected to the main unit of the personal computer 2 (This is referred to as the "main unit of the personal computer" hereinafter.) that performs a variety of information processes, are a monitor 3, a keyboard 4, and a mouse 5.

A microphone 6, a line input cable 7, and a speaker 8 are also connected to the main unit of the personal computer 2. The main unit of the personal computer 2 generates (or records) audio data by digitally converting analog audio signals collected through the microphone 6 and analog audio signals entered from external analog audio equipment such as tape recorders through the line input cable 7. Then, the main unit of the personal computer 2 performs various editing processes such as appropriate dividing and coupling to the recorded audio data, as operated by a user, and subsequently outputs (that is, records) the recorded audio data as an audio file to (on) recording media such as CD-RW disks inserted into the built-in hard disk drives and compact disk-rewritable (CD-RW) drives as well as the recorded audio data file through the speaker 8.

Moreover, the main unit of the personal computer 2 is connected with a universal serial bus (USB) audio device 9 in the USB format that performs a high-precision digital converting process, and so it is possible to enter into the main unit of the personal computer 2 analog audio signals supplied from external analog audio equipment, digitally converted by the USB audio device 9, thus successfully recording the audio data file in a state of higher quality, and to have the audio data file reproduced into the high-quality analog audio signals by analog-converting the recorded audio data file with the USB audio device 9.

Additionally, the main unit of the personal computer 2 is connected with a modem 10 in the USB format, making it possible to establish data communications with information processing units such as other personal computers and a variety of servers over the Internet.

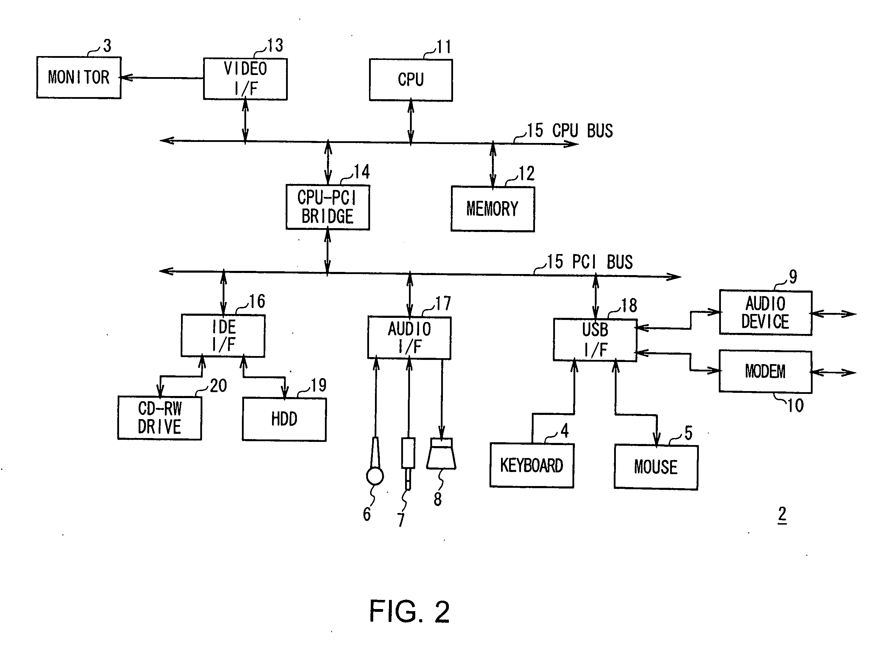

Next, the circuit configuration of the main unit of the personal computer 2 will be explained in detail using Fig. 2. In the main unit of the personal computer 2 the central processing unit (CPU) 11 exercising general control over the main unit of the personal computer 2, is connected with a memory 12 as a work area running various programs, a video interface 13 generating display signals to the monitor 3, and a peripheral component interconnect (PCI) bridge 14 via a CPU bus 15.

Also, the PCI bridge 14 is connected with an integrated drive electronics (IDE) interface 16, an audio interface 17, and a USB interface 18 via the PCI bus 15.

Connected with a hard disk drive 19 storing an operating system and various application programs such as a record edit managing program to be executed by the CPU 11 and a CD-RW drive 20, the IDE interface 16 controls access to the hard disk drive 19 and the CD-RW drive 20.

The audio interface 17 is connected with the microphone 6, the line input cable 7, and the speaker 8. The audio interface 17 generates audio data by digitally converting analog audio signals entered through the microphone 6 and the line input cable 7, and the same audio data is sent out to the PCI bus 15, then analog audio signals are generated by analog converting the audio data supplied through the PCI bus 15 and are output through the speaker 8.

The USB interface 18 is connected with the keyboard 4, the mouse 5, the USB audio device 9, and the modem 10. The USB interface 18 sends operating signals supplied from the keyboard 4 and the mouse 5 to the PCI bus 15 as operated by the user, and at the same time manages the transmission and reception of digital audio data to and from the USB audio device 9 as well as the transmission and reception of transmitting and receiving data to and from the model 10.

The CPU 11 reads the operating system from the hard disk drive 19 as the power is thrown into the main unit of the personal computer 2, and places and runs it on the memory 12. And, the CPU 11 is designed to read and execute a variety of application programs from the hard disk drive 19 as the user operates the keyboard 4 and the mouse 5 under the executable environmental condition of the operating system, thus realizing various functions

### (2) Record Edit Managing Program

As described above, in this personal computer 1 it is designed such that the CPU 11 reads and runs the record edit managing program stored in the hard disk drive 19, thus performing record edit processes such as the recording, splitting and coupling of audio data and the outputting of audio data files to hard disk drives and CD-RW disks.

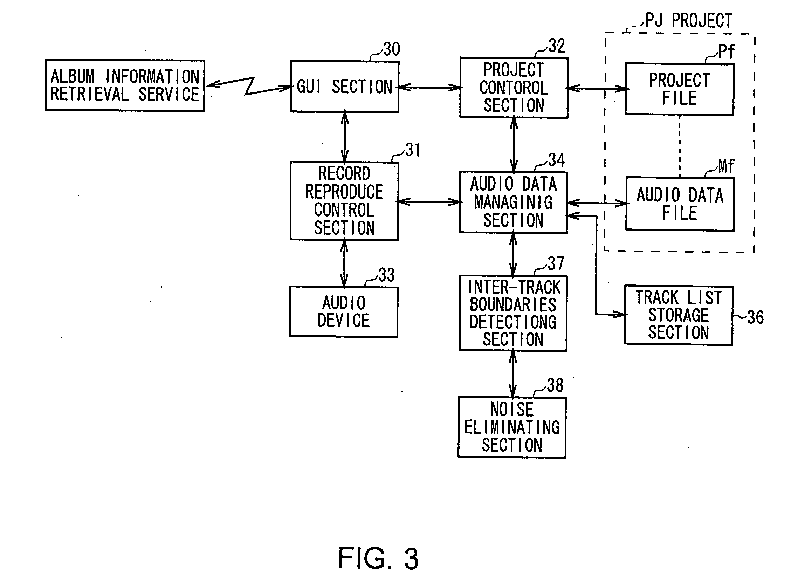

The structure of the record edit managing program is shown in Fig. 3. A GUI section 30 displays various operating screens of the record edit managing program on the monitor 3 and generates operating commands responding to input operations by the user through the keyboard 4 and the mouse 5, and the generated operating commands are sent out to a record reproduce control section 31 and a project managing section 32.

The record reproduce control section 31 controls the recording and reproducing of audio data responding to the operating commands sent from the GUI section 30. That is, when a record command is given from the GUI section 30 in response to a user's operation, the record reproduce control section 31 receives the audio data supplied from an audio device 33 (the USB audio device 9 and the audio interface 17 as well as a software module for making access to them), and send the same audio data to an audio data managing section 34.

The audio data managing section 34 manages the reading of and writing of an audio data file Mf from and to the hard disk drive 19 and the reading and writing of track information from and to a track list storage section 36. That is, the audio data managing section 34 lets the hard disk drive 19 store the audio data supplied from the record reproduce control section 31 as an audio data file Mf. At this time the audio data managing section 34 copies the audio data, which is sent to an inter-track boundaries detecting section 37.

A noise eliminating section 38 acquires the audio data from the inter-track boundaries detecting section 37 and eliminates noise contained in the intrinsically silent portions by performing a noise eliminating process to audio data, thus making the silent portions distinct, and this noise-eliminated audio data is returned to the inter-track boundaries detecting section 37. The inter-track boundaries detecting section 37 automatically detects the inter-track boundaries in this noise-eliminated audio data based the silent portions, and sends to the project managing section 32 the boundary mark information indicating the positions of the inter-track boundaries in accordance with the detected results.

The project managing section 32 manages a project PJ being an aggregate of data the record edit managing program handles. This project PJ is composed of the audio data file Mf, the project file Pf storing a variety of information regarding the audio data file Mf, and track information made up of the playing time and title, etc. of each track read from the track list storage section 36.

The project managing section 32 writes on the project file Pf the start and end time of each piece of music (namely a track) divided by the boundary marks based on the boundary mark information supplied from the inter-track boundaries detecting section 37.

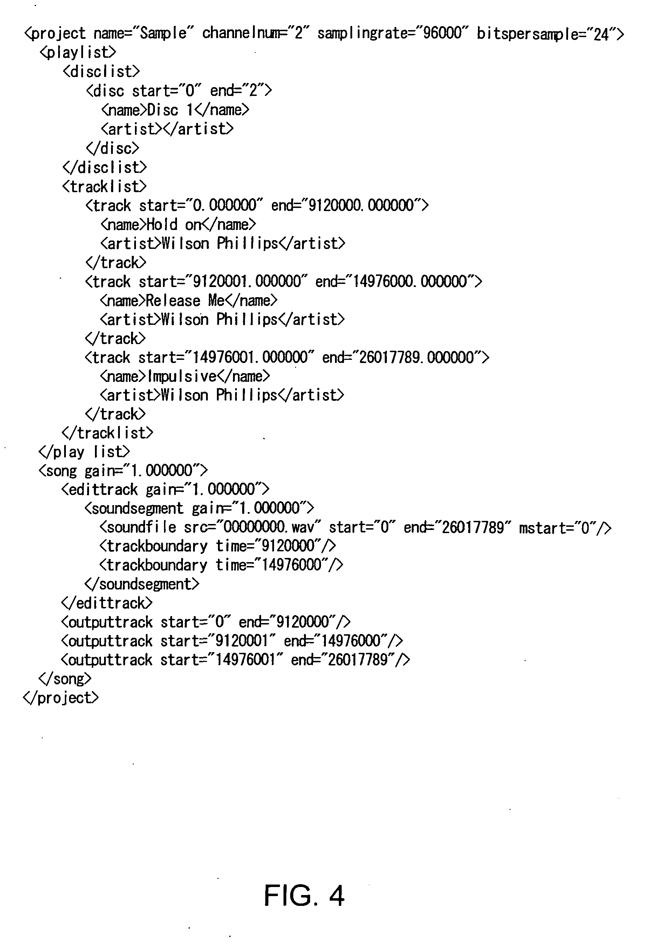

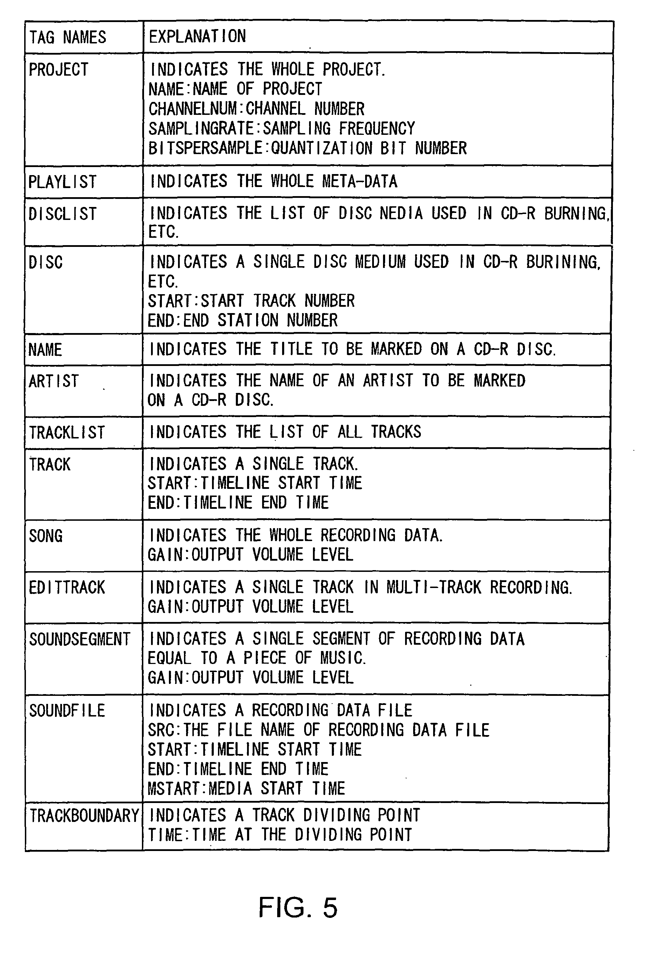

An descriptive example of the project file Pf is shown in Fig. 4. The project file is described using the extensible markup language (XML) language, and such items are entered in it as the start and end time of each track (track start and end), the title and name of an artist of each track (name, artist), and the file name of the audio data file Mf of the reference source of the project file Pf (soundfile src), etc. Examples of tags used in such a project file Pf is shown Fig. 5.

Given a reproduce command from the GUI section 30 in response to the user's operation, the record reproduce control section 31 reads the audio data file Mf controlling the audio data managing section 34, the audio data file MF outputted to the audio device 33.

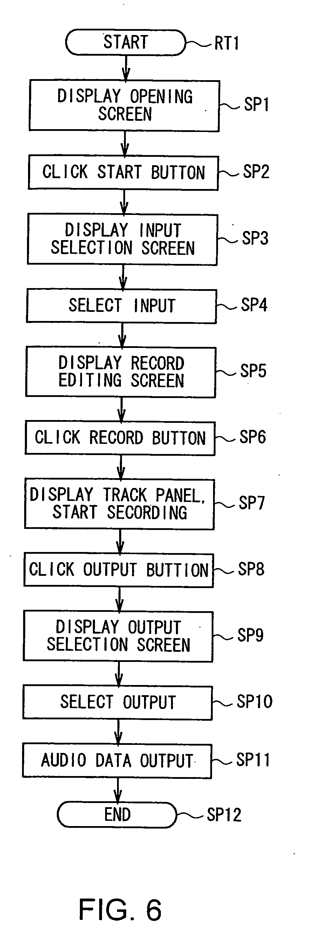

Next, explanation is given on a series of processes starting from the activation of the aforementioned record edit managing program to the recording, editing, and outputting to recording media of audio data, using the flowchart in Fig. 6.

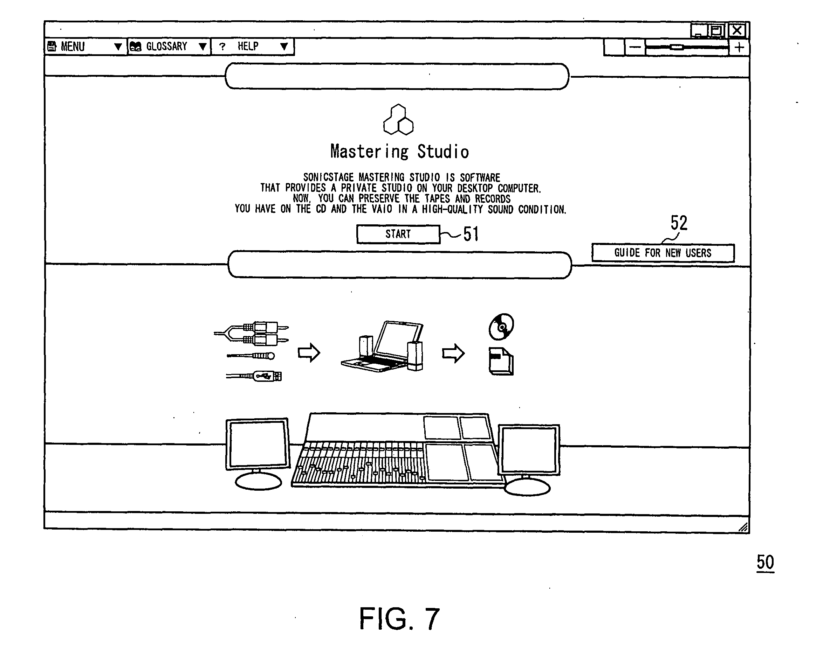

The CPU 11 of the main unit of the personal computer 2 starts running a record edit managing procedure RT1 beginning with the start step, moving to step SP1, where an opening screen 50 as shown in Fig. 7 is displayed on the monitor 3.

Displayed in the center of this opening screen 50 is a start button 51 to start a series of processes of the record edit managing program, and on the right side a user guide button 52 to indicate the on-line user guide. The CPU 11 stands by for the clicking of the start button 51 by the user in step SP2, and when the clicking of the start button 51 is confirmed, the process proceeds to the next step SP3.

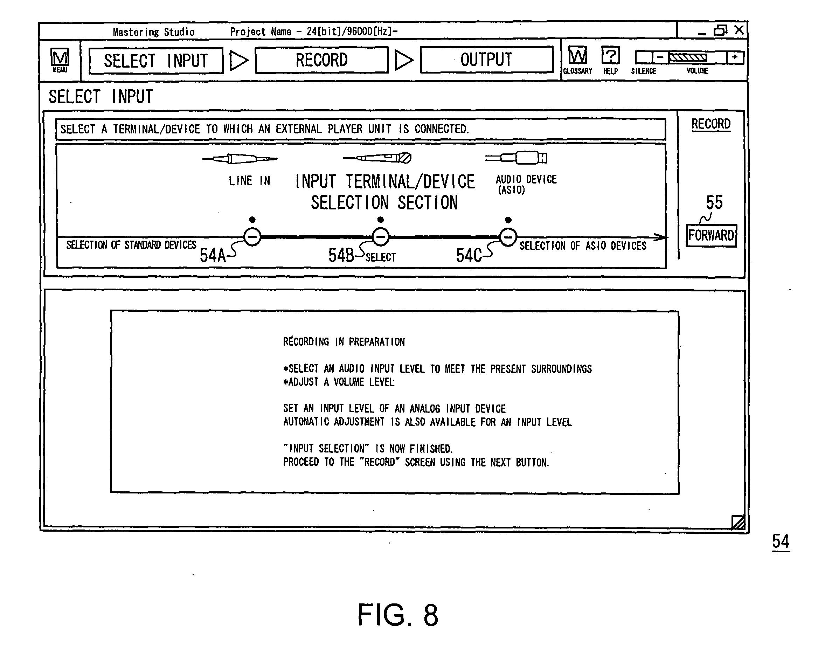

In step SP3 the CPU 11 has an input selection screen 54 as shown in Fig. 8 displayed on the monitor 3. Displayed in the center of this input selection screen 54 are three input selection buttons 54: a line input selection button 54A for selecting the line input cable 7 as the input terminal for analog audio signals, a microphone input selection button 54B for selecting the microphone 6 as the input device for analog audio signals; and a USB audio device select button 54C for selecting the USB audio device 9 as the input device as well as on the right side a "forward" button 55 to decide on an input terminal or a device selected.

The CPU 11 stands by for an input selection operation by the user in the next step SP4, and when it is confirmed that the "forward" button 55 is clicked after any one of the input selection buttons 54A - 54C was selected, the process proceeds to the next step SP5.

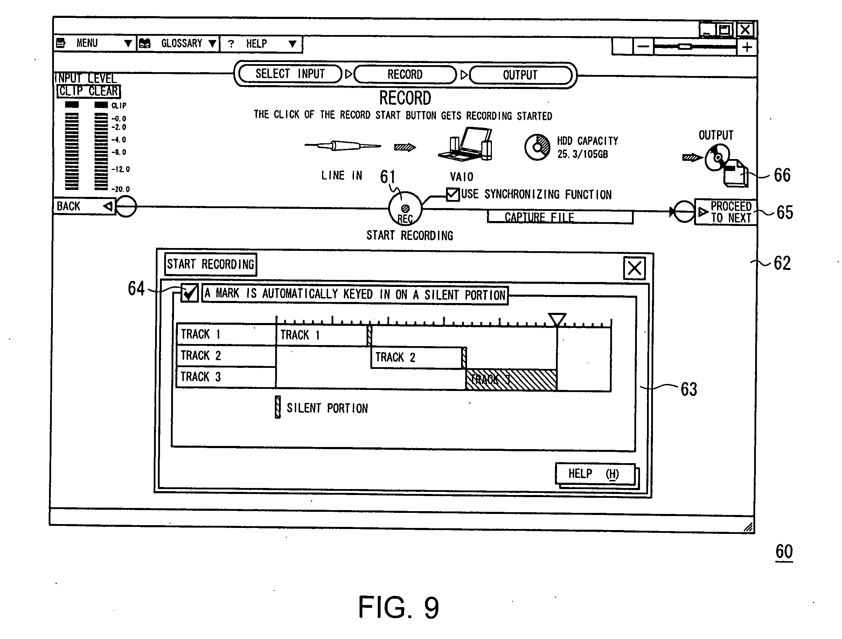

In step SP5 the CPU 11 displays a record edit screen 60 shown in Fig. 9 on the monitor 3. It is designed such that the user can perform various record edit operations on this record edit screen 60.

Displayed at the center of the record edit screen 60 is a record start button 61 to start recording from an input terminal or a device selected on the input selection screen 54. Also, displayed in a panel area 62 occupying the lower half of the record edit screen 60 is an automatic marking setup panel 63 for selecting Effective (that is, "run".) or Ineffective (that is, "not run".) for the automatic marking function, which automatically attaches boundary marks (to be described later) to the positions at the inter-track boundaries in accordance with the results of automatic detection of inter-track boundaries, and the checking of an automatic marking check box 64 makes the automatic marking function effective.

In step SP6 the CPU 11 stands by until the record start button 61 is clicked by the user, and when the clicking of the record start button 61 is confirmed, the process moves to the next step SP7.

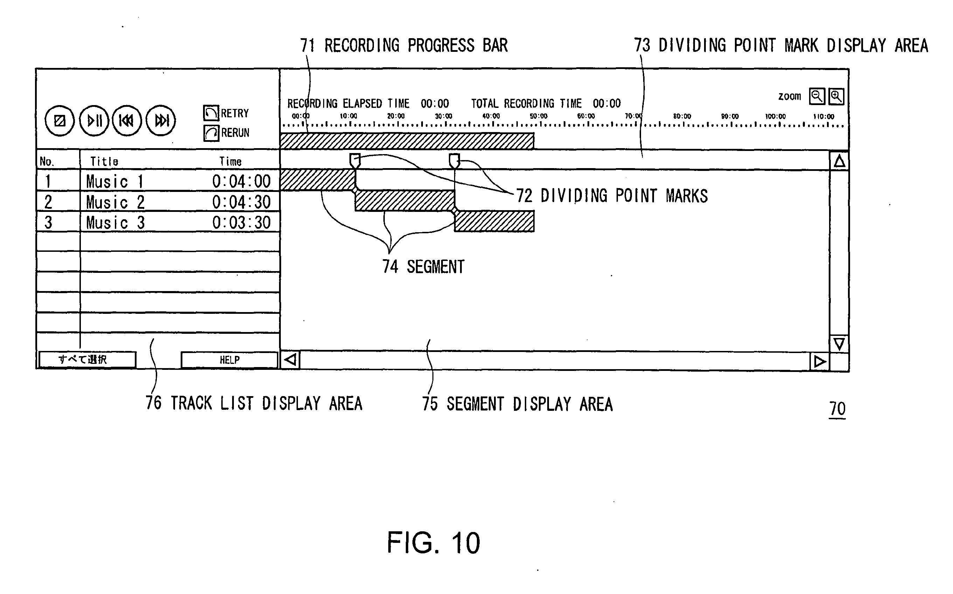

In step SP7 the CPU 11 erases the automatic marking setup panel 63, and in place of it a track panel 70 as shown in Fig. 10 is displayed on the panel area 62 in the record edit screen 60, then the CPU 11 starts recording.

Displayed in the upper part of the track panel 70 is a bar-type record progress bar 71, which extends rightward for a period from the start of recording until the end of recording in response to the passage of recording time. This record progress bar 71 is indicated in red while recording, and in a sky blue when the recording ends.

Provided below the record progress bar 71 is a boundary mark display area 73 for indicating boundary marks 72 to divide the recorded audio data into a plurality of tracks. In case of the automatic marking function being in a state of being effective, these boundary marks 72 are automatically attached to the silent portions of inter-track boundaries by the record edit managing program. Also, boundary marks 72 may be affixed manually by the user after the end of recording.

Prepared below the boundary mark display area 73 is a segment display area 75 for displaying segments 74 visually indicating the recording time and ordinal position of each track. Also, provided to the left side of the segment display area 75 is a track list display area 76 for indicating the track number, title, and recording time of each track in lettering.

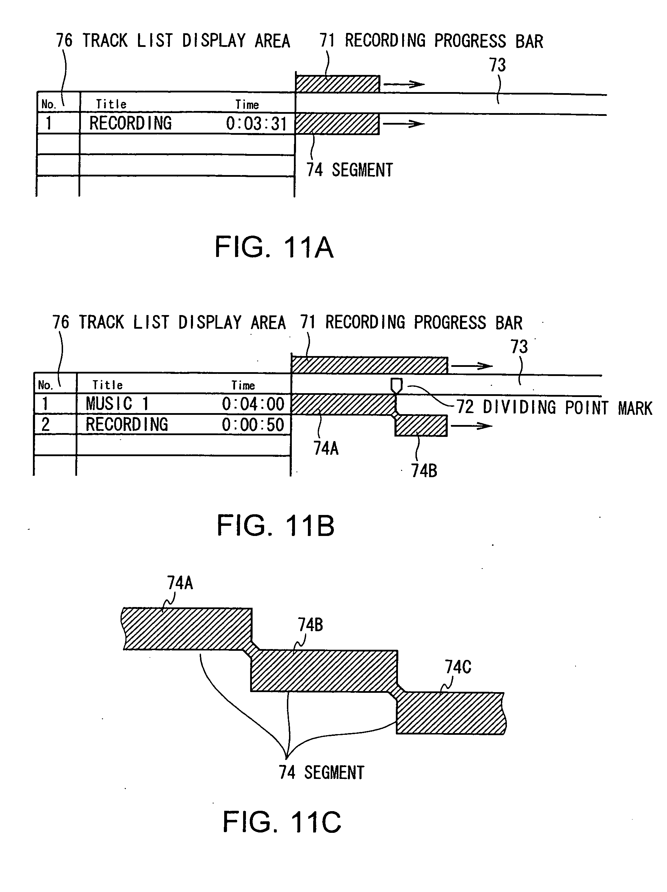

As shown in Fig. 11A, a segment 74 extends rightward while recording in sync with the record progress bar 71.

Then, in case of the automatic marking function being enabled, when a track is divided with a boundary mark 72 affixed automatically to a silent portion as shown in Fig. 11B, a segment 74A indicating the first track ceases from extending further at the position of the boundary mark 72, and at the same time a segment 74B indicating the next track appears just below the segment 74A with the boundary mark 72 as the starting point. This new segment 74B will also extend rightward in sync with the record progress bar 71.

In case of the automatic marking function being enabled as described above, a series of segments 74A, 74B, ...., indicating each of automatically divided tracks, are displayed sequentially in terraces. On the other hand, in case of the automatic marking function being disabled, the segment 74 will not be divided automatically and extend in sync with the record progress bar 71.

In this recording mode a record end button (not shown in figure) is displayed on the record edit screen 60 (Fig. 9) in place of the record start button 61. And, when it is confirmed that this record end button is clicked, the CPU 11 ceases to record.

In this record stop mode the user can perform on the track panel 70 (Fig. 10) such edit processes as changing the boundary positions on the track by moving the boundary mark 72, redividing the track by affixing new boundary marks 72 on it, and linking two continuous tracks by erasing the boundary marks 72.

Here, in a mode of boundary marks 72 being indicated on the track panel 70 the dividing positions on the tracks are not fixed, and, as shown in Fig. 11C, the ends of each segment 74 are displayed in a state where each of them is connected to a preceding or following segment 74. A segment in this state is referred to as an un-divided segment.

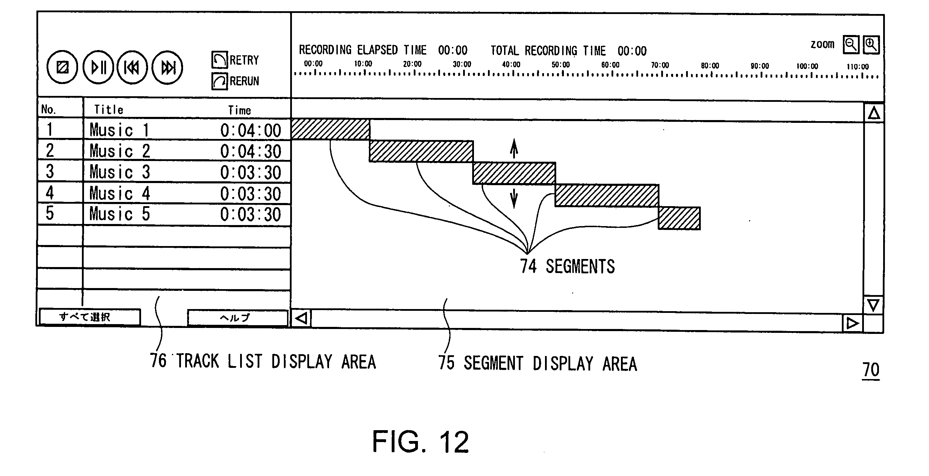

Subsequently, when it is confirmed that a "move to next" button 65 (Fig. 9) in the record edit screen 60, the CPU 11 fixes the dividing positions of tracks. That is, as shown in Fig. 12, the ends of each segment 74 are shown unconnected to the preceding or following segment. Also, the record progress bar 71 and boundary marks 72 are erased.

In this state the user can change the ordinal position of each track by moving each segment 74 upward or downward (in the direction of the arrows). That is, moving up a certain segment 74 by one step will advance the ordinal position in sequence of the track corresponding to the segment 74, and moving down a certain segment 74 by one step will retrograde the ordinal position in sequence of the track corresponding to the segment 74.

In this manner, when it is confirmed that an output button 66 in the record edit screen 60 is clicked after the ordinal position of a tracks was changed(step SP8 in Fig. 6), the CPU 11 will determine editing process results and go on to the next step SP9.

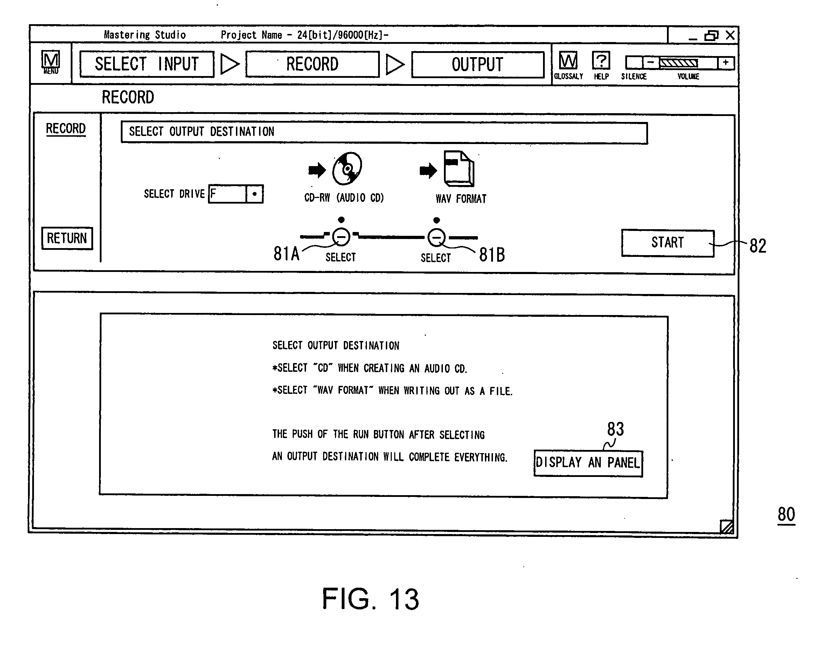

In step SP9 the CPU 11 displays an output destination selection screen 80 as shown in Fig. 13 on the monitor 3. Displayed in the middle of this output selection destination screen 80 are two output destination selection buttons 81: a CD-RW drive selection button 81A for selecting the CD-RW drive 20 as the output destination for an edited track, and a hard disk drive selection button 81B for choosing the hard disk drive 19 as the output destination for the track, and to the right side a start button 82 for starting outputting with a selected output destination fixed.

The CPU 11 stands by for an output destination selection operation by the user in the next step SP10, and when it is confirmed that the start button 82 is clicked after either of the output destination selection buttons 82A or 82B was chosen, the process proceeds to the next step SP11.

In step SP11 the CPU 11 will output an audio data file Mf corresponding to the track to a selected output destination and terminate the record edit managing processes in the next step SP12.

Note that the CPU 11 is designed such that in case of the hard disk drive 19 being chosen as the output destination of a track, the audio data file Mf is outputted, converted into the WAVE format file of a data format for the Windows (R) standard audio recording/reproducing functions, and that in case of the CD-RW drive 20 being selected, the audio data file Mf is outputted, converted into a data format for recording on the CD-R or CD-RW.

### (3) Inter-track boundaries Detecting Process

Prior to recording analog audio signals supplied from an external analog audio device, the CPU 11 operates such that when the right button of the mouse 5 is clicked, for example, after an automatic marking check box 64 is checked with the record edit screen 60 (Fig. 9) displayed on the monitor 3, in response to it, a pop-up menu (not shown in figure) is displayed over the record edit screen 60, the pop-up menu comprising selection items by which to select a way of executing automatic detection of inter-track boundaries matching automatic markings.

This pop-up menu is provided with selection items by which to select the execution of automatic detection of inter-track boundaries using inter-track boundaries specifying input information composed of a variety of inter-track boundaries specifying information for specifying inter-track boundaries to be acquired as the user makes entry, and to select the execution of automatic detection of inter-track boundaries using acquisitive information for specifying inter-track boundaries composed of a variety of information for specifying inter-track boundaries to be acquired with the use of album information retrieval services.

Then, when any selection items are chosen on the pop-up menu through the mouse 5 or the keyboard 4, recording to it, in recording analog audio signals supplied from the external analog audio device as audio data, converted into the digital format, the CPU 11 performs an inter-track boundaries detecting process that automatically detects inter-track boundaries of silent portions of a plurality of tracks of music based on the audio data.

In this case, the CPU 11 will automatically detect inter-track boundaries according to the above record edit managing program described in Fig. 3, however, for the convenience' sake, the inter-track boundaries detecting processes are explained using each section of the record edit managing program in functional blocks.

When the automatic detection is selected for inter-track boundaries using inter-track boundaries specifying input information, the GUI section 30 displays an information input screen (not shown in figure) on which to enter a variety of track information regarding music to be recorded in the input selection screen 55 on the monitor 3 overlaying the pop-up menu,

In this manner, the GUI section 30 prompts the input of the following information as information for specifying inter-track boundaries on the information input screen through the keyboard 4, for example: the number of tracks of music based on analog audio signals to be recorded (This is referred to as "the number of recording tracks" hereinafter.), the longest playing time out of the playing times of the tracks (This is referred to as "the greatest playing time" hereinafter.), and the shortest playing time (This is referred to as "the minimum playing time" hereinafter.), and when the number of recording tracks, the greatest playing time, and the minimum playing time are entered, they are stored into the track list storage section 36 as the inter-track boundaries specifying input information via the record reproduce control section 31 and the audio data managing section 34 in this order.

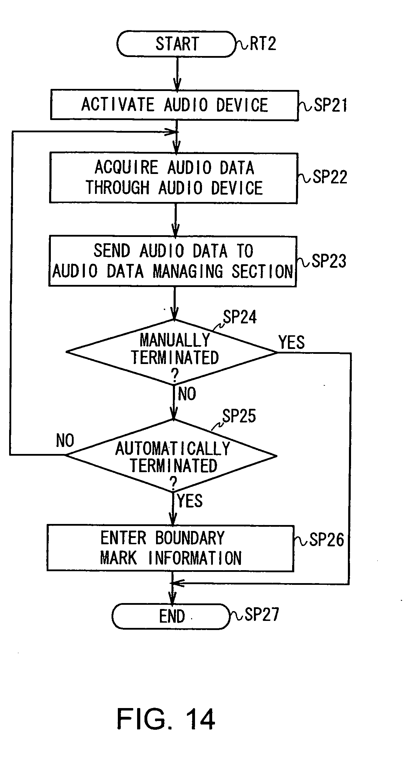

When a record start command is given from the GUI section 30 in this state in response to the clicking of the record start button 61 described above referring to Fig. 9, the record reproduce control section 31 performs a recording process starting with the start step of a recording procedure RT2 shown in Fig. 14, and subsequently the process moves to step SP21.

In step SP21 the record reproduce control section 31 sets the audio device 33 in motion and proceeds to step SP22, thus acquiring a predetermined unit quantity of data of audio data proportionate to the analog audio signals to be recorded, supplied from external analog audio equipment through the audio device 33, then the process moves to step SP23.

In step SP23 the record reproduce control section 31 supplies the audio data managing section 34 with the audio data proportionate to the predetermined unit quantity of data acquired through the audio device 33, and the process goes on to step SP24.

In step SP24 the record reproduce control section 31 judges whether or not a record end command for analog audio signals is entered manually through the keyboard 4 or the mouse 5.

A negative result in this step SP24, if acquired, indicates that as the recording of analog audio signals is under way, a record end command has not yet been entered by the user through the keyboard 4 or the mouse 5, for example, and then the record reproduce control section 31 proceeds to step SP25.

In step SP25 the record reproduce control section 31 judges whether or not to automatically end the recording of analog audio signals, for it is set up so that unless a record end command is entered after having recorded music of a plurality of tracks based on the audio data, the recording of analog audio signals ends automatically at the moment when silent audio data proportionate to a predetermined period of time set in advance (This is referred to as "track end detecting time" hereinafter.) is acquired through the audio device 33, following the last track based on the audio data in linkage with the inter-track boundaries detecting section 37.

If a negative result is acquired in this step SP25, it indicates that in an inter-track boundaries detecting process (to be described later) being run in parallel with the recording process the inter-track boundaries detecting section 37 has not yet detected a silent portion lasting for the track end detecting time longer than the inter-track boundaries in terms of time relative to the silent audio data following the last track, and then the record reproduce control section 31 returns to step SP22.

In this manner the record reproduce control section 31 subsequently performs the processes of the steps SP22 - SP23 - SP24 - SP25 repeatedly in rotation for a period of time until an affirmative result is acquired in step SP24, or a negative result in step SP25, thus sequentially acquiring audio data proportionate to the predetermined unit quantity of data through the audio device 33, the audio data is sent to the audio data managing section 34.

And, an affirmative result, if acquired in step SP25, means that a silent portion lasting for the track end detecting time is detected by the inter-track boundaries detecting section 37 with a result that the record reproduce control section 31 has received the silent portion information supplied from the inter-track boundaries detecting section 37 through the audio data managing section 34, which indicates the detection of the silent portion lasting for the track end detecting time and the end time of the silent portion.

At this time, according to the silent portion information the record reproduce control section 31 judges that all the audio data of music of a plurality of tracks has been acquired through the audio device and supplied to the audio data managing section 34, consequently resulting in stopping acquiring audio data from the audio device 33 as well as supplying audio data to the audio data managing section 34, which automatically ends the recording of analog audio signals, with the process proceeding to step SP26.

In step SP26 the record reproduce control section 31 calculates the end time of the last track by subtracting the track end detection time from the record end time with the end time of the silent portion based on the silent portion information reckoned as the recording suspension time.

Then, the record reproduce control section 31 supplies as the boundary mark information the end time of the last track (namely, this is also the start time of a silent portion following the last track) and the end time of a silent portion following the last track (namely, this is also the recording suspension time) to the project managing section 32 through the audio data managing section 34, thereby letting the project managing section 32 record the end time of the last track and the end time of a silent portion following the last track in the project file Pf, and then the process moves to step SP28, terminating the recording procedure RT2.

Note that an affirmative result, if obtained in step S24, indicates that a record end command was fed to the record reproduce control section 31 from the GUI section 30 as the user clicked the record end button in the record edit screen 60 with the mouse 5.

At this time the record reproduce control section 31 ceases to acquire audio data from the audio device 33 in response to the record end command and to supply audio data to the audio data managing section 34, thus ending the recording of analog audio signals, and the record end time at the time of ending recording is fed as the boundary mark information to the project managing section 32 through the audio data managing section 34, thereby letting the project managing section 32 record the record end time in the project file Pf, and then the process proceeds to step SP28.

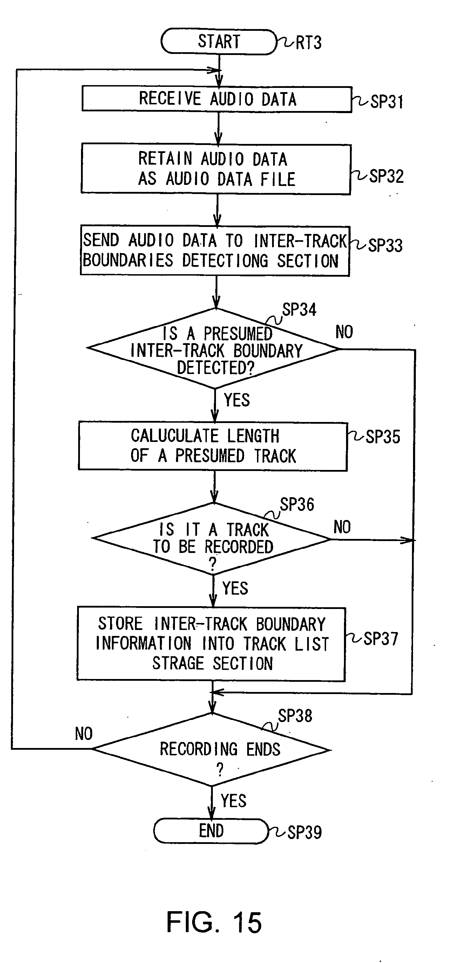

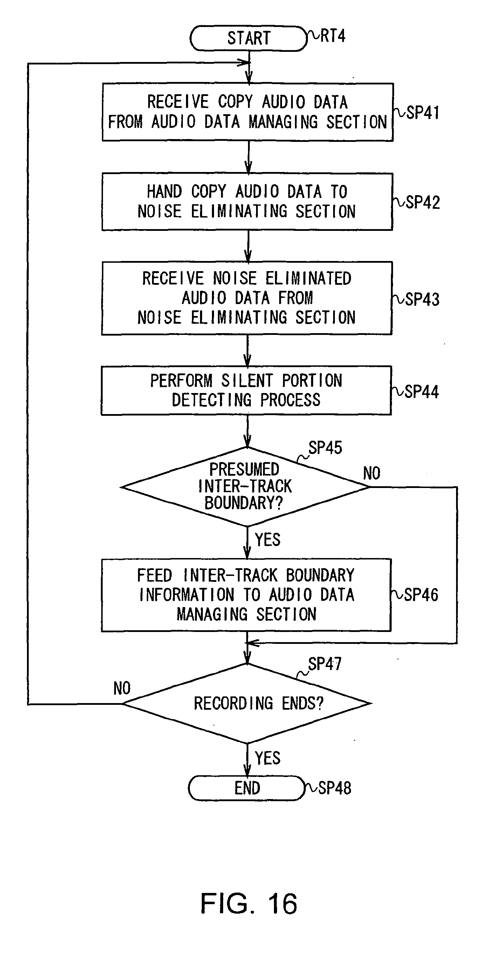

Here, as described above, the inter-track boundaries detecting section 37 performs the inter-track boundaries detecting process in parallel with the recording process conducted by the record reproduce control section 31, and the audio data managing section 34, too, performs the inter-track boundaries specifying process using the inter-track boundaries specifying input information in parallel with the recording process conducted by the record reproduce control section 31, and therefore, explanation is given below on the inter-track boundaries specifying process and the inter-track boundaries detecting process using Figs. 15 and 16.

First, the audio data managing section 34 performs the inter-track boundaries specifying process almost at the same time when the record reproduce control section 31 starts the recording process, beginning with the start step of the inter-track boundaries specifying procedure RT3 shown in Fig. 15, and the process proceeds to step SP31.

In step SP31 the audio data managing section 34 receives audio data of a predetermined unit quantity of data supplied from the record reproduce control section 31, and the process moves to step SP32.

In step SP32 the audio data managing section 34 generates copy audio data by copying the audio data and lets the hard disk drive 19 retain the audio data of the origin of copy as an audio data file Mf, and the process proceeds to step SP33.

In step SP33 the audio data managing section 34 feeds the copy audio data to the inter-track boundaries detecting section 37, and the process proceeds to step SP34.

The inter-track boundaries detecting section 37 performs the inter-track boundaries detecting process almost at the same time when the record reproduce control section 31 starts the recording process, beginning with the start step of the inter-track boundaries detecting procedure RT4 shown in Fig. 16, and the process proceeds to step SP41.

In step SP41 the inter-track boundaries detecting section 37 receives the copy audio data supplied from the audio data managing section 34, and the process proceeds to step SP42.

In step SP42 the inter-track boundaries detecting section 37 feeds the copy audio data to the noise eliminating section 38, and the process proceeds to step SP43.

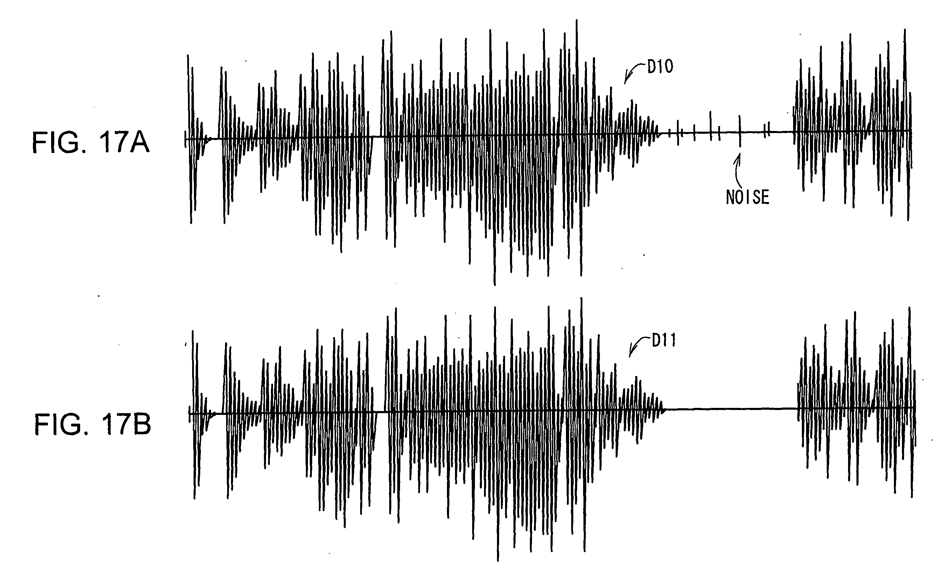

At this time, as shown in Figs. 17A and 17B, the noise eliminating section 38 generates noise eliminated audio data D11 by performing a nose eliminating process to the copy audio data D10, and the generated noise eliminated audio data D11 is supplied to the inter-track boundaries detecting section 37.

In step SP43 the inter-track boundaries detecting section 37 receives the noise eliminated audio data D11 supplied from the noise eliminating section 38, and the process proceeds to step SP44.

In step SP44 the inter-track boundaries detecting section 37 performs to the noise eliminated audio data D11 a silent portion detecting process to detect a portion presumed as a silent portion whose signal level is lower than the predetermined first level threshold value, and the process proceeds to step SP45.

In step SP45 the inter-track boundaries detecting section 37 compares the time length of the detected silent portion with a predetermined time selected for inter-track boundaries detection (This is referred to as the "inter-track boundaries detection time" hereinafter".) shorter than the track end detection time and the track end detection time, whereby it is judged whether or not the silent portion is a presumed inter-track boundary presumed to be an inter-track boundary between a plurality of tracks.

An affirmative result, if obtained, in this step SP45, indicates that it could be judged that the detected silent portion would be a presumed inter-track boundary different from the silent portion following the last track, because the time length of the detected silent portion in the noise eliminated audio data D11 is longer than the inter-track boundaries detection time but shorter than the track end detection time, then the process of the inter-track boundaries detecting section 37 proceeds to step SP46.

In step SP46 the inter-track boundaries detecting section 37 feeds to the audio data managing section 34 the inter-track boundary information consisting of the start time and the end time as the result of the presumed inter-track boundary detected in the noise eliminated audio data D11, then the process moves on to step SP47.

Meanwhile, if a negative result is acquired in step SP45, it indicates that the silent portion is the silent portion following the last track because the time length of the presumed inter-track boundary detected in the noise eliminated audio data D11 is shorter than the inter-track detection time, or because the time length of the silent portion is the same in length as the track end detection time.

If the silent portion differs from the presumed inter-track boundary, then the inter-track boundaries detecting section 37 supplies the audio data managing section 34 with inter-track boundary absence information indicating that there is no inter-track boundaries in the noise eliminated audio data D11, then the process goes to step SP47, and if a silent portion following the last track is detected, the silent portion information is fed to the record reproduce control section 31 through the audio data managing section 34, and the process proceeds to step SP47.

In step SP47 the inter-track boundaries detecting section 37 judges whether or not the recording of analog audio signals ends.

If a negative result is acquired in this step SP47, it indicates that audio data is still being acquired by the record reproduce control section 31, and therefore that the recording of analog audio signals does not end as yet, then the process of the inter-track boundaries detecting section 37 returns to step SP41.

Thus, the inter-track boundaries detecting section 37 repeats the process of the steps SP41-SP42-SP43-SP44-SP45-SP46-SP47 in rotation until an affirmative result is acquired in step SP47, taking in the copy audio data D10 successively from the audio data managing section 34, the noise contained in it eliminated, whereby detecting presumed inter-track boundaries in the noise eliminated audio data D11 generated as a result.

And, an affirmative result in step SP47, if acquired, indicates that the record reproduce control section 31 ceases to acquire audio data, and that the recording of analog audio signals ends, and then the process of the inter-track boundaries detecting section 37 proceeds to step SP48, resulting in the termination of the inter-track boundaries detecting procedure RT4.

Also, in step SP34 (Fig. 15) the audio data managing section 34 receives either inter-track boundary information or inter-track boundary absence information supplied from the inter-track boundaries detecting section 37, and judges whether or not presumed inter-track boundaries are detected by the inter-track boundaries detecting section 37.

An affirmative result in this step SP34, if obtained, indicates that the inter-track boundary information is received because presumed inter-track boundaries have been detected by the inter-track boundaries detecting section 37, and then the process of the audio data managing section 34 proceeds to step SP35.

In step SP35 the audio data managing section 34 calculates the time length of a presumed track presumed to be a track just behind the presumed inter-track boundary, divided by the presumed inter-track boundary (This is referred to as the "presumed track playing time" hereinafter".) based on, for example, the record start time (or the end time based on the inter-track boundary information) already notified from the record reproduce control section 31 at the start time of recording analog audio signals and the start time of the presumed inter-track boundary based on the inter-track boundary information, and the process proceeds to step SP36.

In step SP36 the audio data managing section 34 reads inter-track boundaries specifying input information from the track list storage section 36, and compares the greatest play time and the minimum playing time based on the inter-track boundaries specifying input information with the presumed track playing time, based on the result of which it is judged whether or not the presumed track is the very track that should be recorded.

If an affirmative result is acquired in this step SP36, it indicates that it is highly possible that the presumed track is any one of a plurality of tracks that should be recorded because the presumed track playing time has a length longer than the minimum playing time and shorter than the greatest playing time at the same time, and at this time the audio data managing section 34 judges that the presumed inter-track boundary just after the presumed track is properly detected as the legitimate inter-track boundary, and the process proceeds to SP37.

In step SP37 the audio data managing section 34 lets the track list storage section 36 store the inter-track boundary information, and the process moves to step SP38.

Meantime, if a negative result is acquired in step SP34, it indicates that the inter-track boundary absence information is received because presumed inter-track boundaries were not detected in the noise eliminated audio data D11 by the inter-track boundaries detecting section 37, and then the process of the audio data managing section 34 proceeds to step SP38.

As well, a negative result in step SP36, if acquired, indicates that the presumed track is not any of a plurality of tracks that should be recorded because the resumed track playing time is shorter than the minimum playing time or longer than the greatest play time, and at this time the audio data managing section 34 judges that a presumed inter-track boundary just after the presumed track is erroneously detected at a portion different from the legitimate inter-track boundary, resulting in the destruction of the inter-track boundary information, and the process proceeds to step SP38.

In step SP38 the audio data managing section 34 judges whether or not the recording of analog audio signals ends.

If a negative result is acquired in this step SP38, it indicates that the record reproduce control section 31 is still acquiring the audio data proportionate to the analog audio signals to be recorded and that the recording of the analog audio signals does not end yet, and then the process of the audio data managing section 34 returns to step SP31.

Thus, the audio data managing section 34 repeats the processes of the steps SP31-SP32-SP33-SP34-SP35-SP36-SP37-38 in rotation until an affirmative result is acquired in step SP38, whereby storing the audio data into the hard disk drive 19 updating the audio data file Mf sequentially taking in the audio data of a predetermined unit quantity of data from the record reproduce control section 31, and at the same time it is confirmed whether or not the presumed inter-track boundary is a proper inter-track boundary for a track to be recorded based on the inter-track boundary information taken in from the inter-track boundaries detecting section 37.

And, if an affirmative result is acquired in step SP38, it indicates that the record reproduce control section 31 ceases to acquire audio data proportionate to analog audio signals to be recorded and that the recording of the analog audio signals has completed.

At this time the audio data managing section 34 stores into the track list storage section 36 as the information on the number of presumed tracks the number of presumed tracks proportionate to the number of the presumed inter-track boundaries specified to be the legitimate inter-track boundaries (that is, this is a number greater by one than the number of presumed inter-track boundaries, and this number of tracks is referred to as the "number of presumed tracks" hereinafter.), and the process moves to step SP39, terminating the inter-track boundaries specifying procedure RT3.

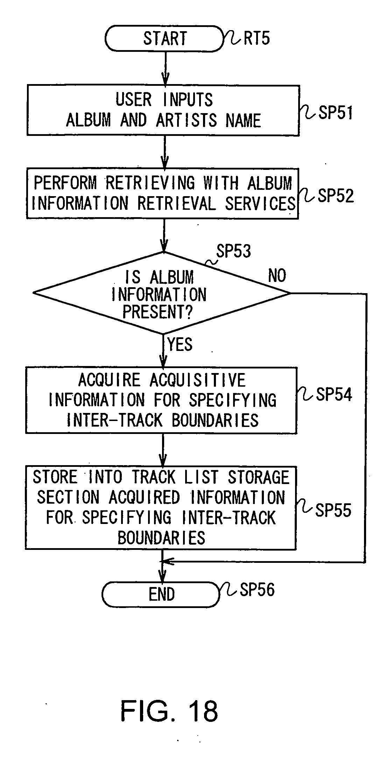

On the other hand, when automatic detection is chosen for inter-track boundaries using the acquisitive information for specifying inter-track boundaries, the GUI section 30 indicates an information input screen in place of the pop-up menu in the input selection screen 55 on the monitor 3, thus performing a process for acquisitive information for specifying inter-track boundaries (Fig. 18) beginning with the start step of the procedure for acquisitive information for specifying inter-track boundaries RT3, subsequently proceeding to SP51.

In step SP51, when album designative information for designating an album including the names of the album and artist, etc. of music to be recorded is entered on the information input screen through the keyboard 4, for example, the GUI section 30 generates a retrieval demand signal storing the album designative information, which is transmitted to an information providing server providing album information retrieval services through the modem 10 over the Internet, and then the process moves to step SP52.

Here, storing in advance a great deal of album information composed of the number of pieces of music (namely, the number of tracks to be recorded) and the playing time of each track, etc., the information providing server transmits to the personal computer 1 the signals of retrieved results which indicates the availability of the album information corresponding to the album designated by the album designative information by retrieving the great deal of album information with the use of the album designative information.

Accordingly, in step SP52 the GUI section 30 receives the signals of retrieved results transmitted from the information providing server, proceeding to step SP53, wherein it judges whether or not there is album information matching the album designative information.

If an affirmative result is acquired in step SP53, it indicates that album information matching the album designative information is stored in the information providing server, and then the GUI section 30 proceeds to step SP54.

In step SP54 the GUI section 30 obtains acquisitive information for specifying inter-track boundaries composed of the number of tracks to be recorded and the playing time of each track as the inter-track boundaries specifying information based on the album information designated by the information providing server, and the process moves to step SP55.

In step SP55 the GUI section 30 lets the track list storage section 36 store the acquisitive information for specifying inter-track boundaries via the record reproduce control section 31 and the audio data managing section 34 sequentially, and subsequently the process proceeds to step SP56, terminating an information acquisitive procedure for specifying inter-track boundaries RT5.

In this state the record reproduce control section 31 performs the recording process described above referring to Fig. 1 4, and at the same time the inter-track boundaries detecting section 37 also performs the inter-track boundaries detecting process described above referring to Fig. 16.

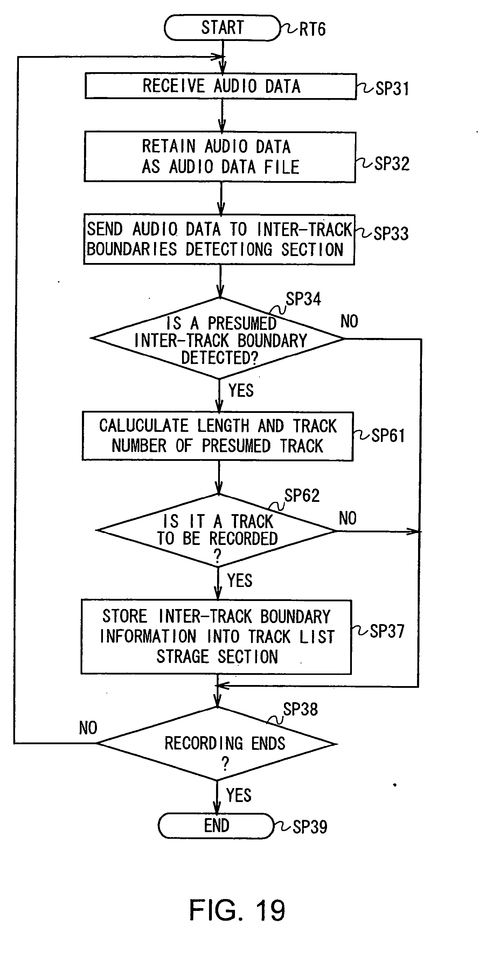

Also, the audio data managing section 34 performs the inter-track boundaries specifying process using the acquisitive information for specifying inter-track boundaries in parallel with the recording process performed by the record reproduce control section 31, and starts running an inter-track boundaries specifying procedure RT6 shown in Fig. 19, wherein the same reference numbers as used in Fig. 15 are assigned to similar steps , beginning with the start step, and the process proceeds to SP31.

And, the audio data managing section 34 performs the process of the steps SP 31 to SP34 sequentially, and when an affirmative result is acquired in this step SP34, the process proceeds to step SP61.

In step SP61 the audio data managing section 34 calculates the presumed track playing time of a presumed track preceding the presumed inter-track boundary based on the record start time (or end time based on the inter-track boundary information) already notified from the record reproduce control section 31 at the start time of recording analog audio signals and the start time of a presumed inter-track boundary based on the inter-track boundary information as well as the number of a track indicating its turn on the ordinal position counted from the record start time, and then process moves to step SP62.

In step SP62 the audio data managing section 34 reads acquisitive information for specifying inter-track boundaries from the track list storage section 36, and compares the absolute value resulted from subtracting the presumed track playing time from the playing time of the corresponding track number based on the acquisitive information for specifying inter-track boundaries (This is referred to as the "playing time error value" hereinafter) with a pre-selected error threshold value, based on the comparison result of which it is judged whether or not the presumed track is the legitimate track to be recorded.

If an affirmative result is acquired in this step SP62, it indicates that because the playing time error value is smaller than the error threshold value, it is highly possible that the presumed track may be the track that is indicated by the calculated track number, and at this moment the audio data managing section 34 judges that the presumed inter-track boundary following the presumed track is properly detected as the legitimate inter-track boundary, and after the process in step SP 37 is subsequently performed, the process proceeds to sep SP38.

Meantime, if a negative result is acquired in step SP62, it indicates that because the playing time error value is greater than the error threshold value, the presumed track is not any of a plurality of tracks to be recorded, that the calculated track number indicated, and then the audio data managing section 34 judges that the presumed inter-track boundary following the presumed track is erroneously detected at a portion differing from the legitimate inter-track boundary, and the process proceeds to step SP38.

And, if a negative result is acquired as a result of performing the process in step SP38, the audio data managing section 34 returns to step SP31, and subsequently repeats the processes of the steps SP31-SP32-SP33-SP34-SP61-SP62-SP37-SP38 sequentially in rotation for a period until an affirmative result is acquired in step SP38, thereby taking in audio data of a predetermined unit quantity of data sequentially from the record reproduce control section 31, and lets the hard disk drive 19 store the audio data updating the audio data file Mf, and it is specified based on the inter-track boundary information taken in from the inter-track boundaries detecting section 37 whether or not the presumed inter-track boundary is the legitimate inter-track boundary relative to a track to be recorded.

And, if an affirmative result is acquired in step SP38, the audio data managing section 34 proceeds to the following step SP63 and terminates the inter-track boundaries specifying procedure RT6.

In addition to it, it is designed such that when the recording of analog audio signals ends, the record reproduce control section 31 confirms whether or not the presumed inter-track boundary automatically detected in parallel with the recording of the analog audio signals is specified as the legitimate inter-track boundary.

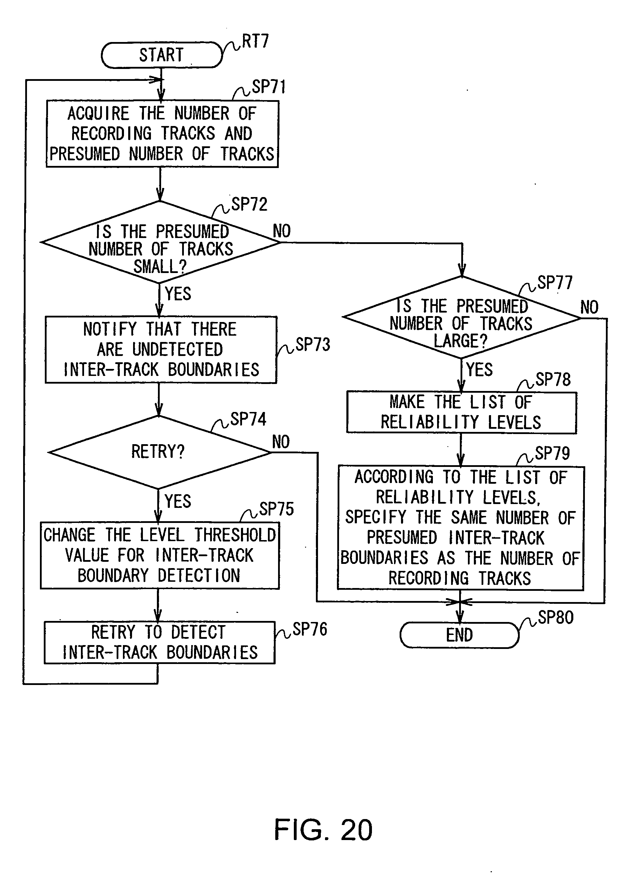

First, when the recording of analog audio signals ends, which is performed automatically detecting inter-track boundaries using the inter-track boundaries specifying input information, the record reproduce control section 31 performs a final inter-track boundaries specifying procedure using the inter-track boundaries specifying input information, thereby running the final inter-track boundaries specifying procedure RT7 shown in Fig. 20, beginning with the start step, and the process proceeds to step SP71.

In step SP71 the record reproduce control section 31 reads information on the presumed number of tracks and the inter-track boundaries specifying input information from the track list storage section 36 through the audio data managing section 34, and the process moves to step SP72.

In step SP72 the record reproduce control section 31 compares the presumed number of tracks based on the information on the presumed number of tracks with the number of recording tracks based on the inter-track boundaries specifying input information, whereby it is judged whether or not the presumed number of tracks is smaller than the number of recording tracks.

If an affirmative result is acquired in this step SP72, it indicates that because the noise residing in the inter-track boundary relative to the noise eliminated audio data D11 is not entirely eliminated, the inter-track boundaries for the number of recording tracks (namely, the number of inter-track boundaries smaller by one (1) than the number of recording tracks) could not be detected properly (that is, detected is the only number of inter-track boundaries smaller than the number of inter-track boundaries for the number of recording tracks) by comparing the signal level of the noise eliminated audio data D11 and the first level threshold value, then the record reproduce control section 31 proceeds to step SP73.

In step SP73 the record reproduce control section 31 notifies the user with the GUI section 30 via the monitor of the fact that the inter-track boundaries for the entire number of recording tracks could not be detected (in other words, there are un-detected inter-track boundaries that could not be detected relative to the inter-track boundaries of all the number of recording tracks, and the process proceeds to step SP74.

In step SP74 the record reproduce control section 31 judges whether or not an inter-track boundaries detecting operation should be performed once again.

If an affirmative result is acquired in step SP74, it indicates that, as a result of having notified the user through the monitor 3 that all the inter-track boundaries for the number of recorded tracks could not be detected, a retry command for detecting inter-track boundaries has been entered by the user, and at this time the record reproduce control section 31 receives the retry command fed from the GUI section 30, and the process proceeds to step SP75.

In step SP75 the record reproduce control section 31 notifies the inter-track boundaries detecting section 37 that the first level threshold value used in the preceding inter-track boundaries detection be changed in the retry to detect inter-track boundaries to a second level threshold value slightly larger than the first level threshold value, and the process proceeds to step SP76.

In step SP76 the record reproduce control section 31 lets the audio data managing section 34 and the inter-track boundaries detecting section 37 retry inter-track boundaries detection using the second level threshold value, and the process returns to SP71.

At this time, the inter-track boundaries detecting section 37 performs an inter-track boundaries detecting retry process to get an inter-track boundaries detection retry procedure RT8, beginning with the start step, proceeding to step SP81.

In step SP81 the inter-track boundaries detecting section 37 is to detect portions presumed to be silent portions through which a signal level lower than the second level threshold value continues in a range of time longer than the inter-track boundaries detection time but smaller than the track end detection time in relation to the entire noise eliminated audio data D11 used from the record start time until the record end time of analog audio signals (This is referred to as the "entirely noise eliminated audio data" hereinafter.), then the process proceeds to step SP82.

In step SP81 the inter-track boundaries detecting section 37 supplies the audio data managing section 34 with the start time and the end time of the presumed inter-track boundary as the inter-track boundary information with the silent portions detected in the entirely noise eliminated audio data as the presumed inter-track boundary, then the process moves to step SP83, terminating the inter-track boundaries detection retry procedure RT8,

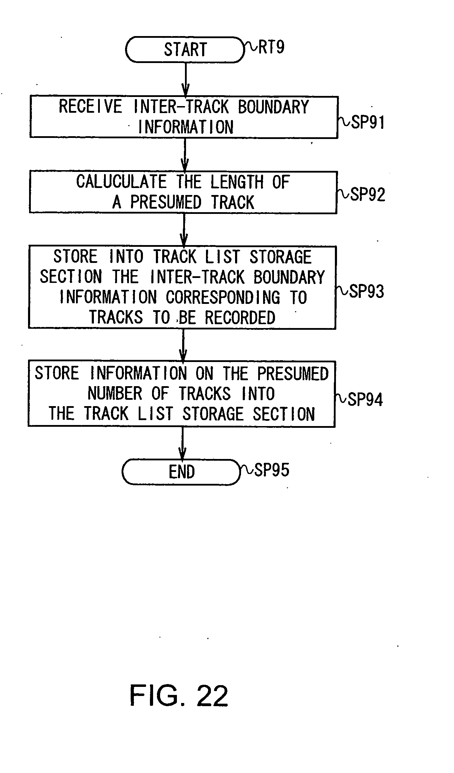

Also, the audio data managing section 34 performs an inter-track boundaries specifying retry procedure using the inter-track boundaries specifying input information, starting an inter-track boundaries specifying retry procedure RT9 shown in Fig. 22, beginning with the start step, and the process proceeds to step SP91.

In step SP91 the audio data managing section 34 receives inter-track boundary information fed from the inter-track boundaries detecting section 37 and proceeds to step SP92.

In this step SP92 the audio data managing section 34 calculates the presumed track playing time of a presumed track following a presumed inter-track boundary based on the record start time or the end time based the inter-track boundary information and on the start time of the inter-track boundary based on the inter-track boundary information, and the process proceeds to SP93.

In step SP93 the audio data managing section 34 reads the inter-track boundaries specifying input information from the track list storage section 36, and compares the greatest playing time and the minimum playing time based on the inter-track boundaries specifying input information with the presumed track playing time, based on the result of which it is judged that the resumed track is a track to be recorded, whose presumed track play time is greater than the minimum playing time and smaller than the greatest playing time.

Then, the audio data managing section 34 specifies as the legitimate inter-track boundary a presumed inter-track boundary just ahead of the presumed track judged to be a track that should be recorded, and lets the track list storage section 36 store the inter-track boundary information on the specified presumed inter-track boundary, and the process moves to step SP94.

In step SP94 the audio data managing section 34 lets the track list storage section 36 store as the information on the presumed number of tracks the presumed number of tracks of the presumed tracks judged to be the tracks to be recorded, and then proceeds to step SP95, terminating the inter-track boundaries specifying retry procedure RT9.

Then, in step SP71 (Fig. 20) the record reproduce control section 31 once again reads the inter-track boundaries specifying input information and the information on the presumed number of tracks acquired by the retry of inter-track boundary detection from the track list storage section 36 through the audio data managing section 34, and the process proceeds to SP72.

In step SP72 the record reproduce control section 31 compares the resumed number of tracks based on the information on the presumed number of tracks with the number of recording tracks based on the inter-track boundaries specifying input information, whereby it is judged whether or not the presumed number of tracks is smaller than the number of recording tracks.

As a result, when an affirmative result is acquired once again in step SP72, the record reproduce control section 31 subsequently performs the processes of step SP73 and step SP74 sequentially, and when the processes of step SP75 and step SP76 are performed as demanded by the user, inter-track boundary detection is carried out once again with the use of, in place of the second level threshold value, a third level threshold value slightly greater than the second level threshold value, then the process returns to SP71.

In this manner the record reproduce control section 31 subsequently repeats the processes of steps SP71-SP72-SP73-SP74-SP75- SP76 in rotation for a period until a negative result is obtained in step SP72 and step SP74, whereby repeating the retry of inter-track boundary detection with the level threshold value made slightly larger sequentially, resulting in increasing the detected number of presumed inter-track boundaries in the entire noise eliminated audio data.

And, if a negative result is acquired in step SP72, it indicates, for example, that because the extent of noise elimination with regard to the noise eliminated audio data D11 was appropriate, the same number of presumed inter-track boundaries as the inter-track boundaries for the number of recording tracks is properly detected, or that because the level threshold value was made too large due to the retry of inter-track boundary detection, presumed inter-track boundaries have been detected with the number of portions greater than the inter-track boundaries for the number of recording tracks judged to be silent portions, and at this time the process of the record reproduce control section 31 moves to step SP77.

In step SP77 the record reproduce control section 31 compares the presumed number of tracks based on the up-to-date information on the presumed number of tracks (that is, in case of the retry of inter-track boundaries detection having never been performed, the information on the presumed number of tracks stored in the track list storage section 36 in recording analog audio signals, or in case of the retry of inter-track boundaries detection having been conducted, the information on the presumed number of tracks stored in the track list storage section 36 when retry was made at the last time.) with the number of recording tracks based on the inter-track boundaries specifying input information, whereby it is judged whether or not the presumed number of tracks is greater than the number of recording tracks.

An affirmative result in this step SP77, if acquired, indicates that presumed inter-track boundaries more than the inter-track boundaries for the number of recording tracks are detected by retry of inter-track boundary detection, and then the process of the record reproduce control section 31 proceeds to step SP78.

Here, the audio data managing section 34 adds to each of all the presumed inter-track boundaries detected for a period from the inter-track boundary detection at the time of recording analog audio signals until the final retry of the inter-track boundary detection the information of reliability indicating the extent of one inter-track boundary being the same as the legitimate inter-track boundary by the fact how soon or at what ordinal turn of inter-track boundaries detection it was detected.

That is, the audio data managing section 34 affixes the highest reliability to a presumed inter-track boundary already detected by the inter-track boundary detection conducted at the time of recording analog audio signals (namely, at the first turn), for example, because it was detected under the severest detecting condition using the first level threshold of the smallest value, and the less reliability to presumed inter-track boundaries detected for the first time in a plurality of retry of inter-track boundaries detection the larger the times of retry until the presumed inter-track boundary is found because of that fact that the detecting condition is made less severe with the level threshold value getting larger sequentially at every another attempt.

Accordingly, in step SP78 the record reproduce control section 31 takes in information on the reliability of each of all the inter-track boundaries from the audio data managing section 34 and makes a list of reliability levels showing all the presumed inter-track boundaries arranged sequentially in order from one with the highest reliability to one with the lowest reliability, and the process moves to step SP79.

And then, in step SP79 the record reproduce control section 31 selects the same number of presumed inter-track boundaries as the number of presumed inter-track boundaries for the number of recording tracks (namely, a number smaller by one (1) than the number of recording tracks) out of all the presumed inter-track boundaries sequentially from the one with the highest level of reliability to those with lower levels of reliability according to the list of reliability levels, whereby specifying legitimate inter-track boundaries, and the only inter-track boundary information of the specified presumed inter-track boundaries is reflected in the automatic division of tracks as described above in reference to Fig. 11B, and the process proceeds to step SP80, terminating the final inter-track boundaries specifying procedure RT7.

Meanwhile, if a negative result is acquired in step SP77, it indicates that the same number of presumed inter-track boundaries as the number of inter-track boundaries for the number of recording tracks are properly detected, and at this time the record reproduce control section 31 specifies the inter-track boundary information of the same number of presumed inter-track boundaries as the number of inter-track boundaries for the number of recording tracks as the legitimate inter-track boundaries, and the inter-track boundary information on the presumed inter-track boundaries specified is reflected in the automatic dividing of tracks described above in reference to Fig. 11B, then the process proceeds to SP80.

Also, if a negative result is obtained in step SP74, it indicates that as a result of notifying the user through the monitor 3 that the inter-track boundaries for the number of recording tracks could not be detected, the user did not enter a retry command for detecting inter-track boundaries, that is, the dividing will be carried out manually by the user, and then the process of the record reproduce control section 31 moves to step SP80.

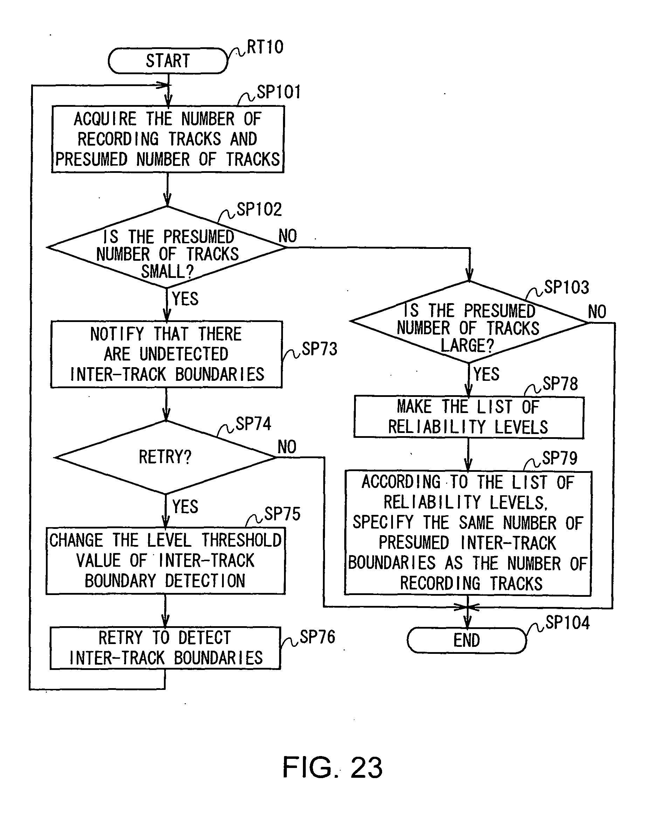

When the recording of analog audio signals ends with inter-track boundaries automatically being detected using the acquisitive information for specifying inter-track boundaries, the record reproduce control section 31 performs the process for finally specifying inter-track boundaries using the acquisitive information for specifying inter-track boundaries, thereby starting the final inter-track boundaries specifying procedure RT10 shown in Fig. 23 beginning with the start step started, wherein the same reference numerals are assigned to the similar parts in Fig. 20, and the process proceeds to step SP101.

In step SP101 the record reproduce control section 31 reads the information on presumed number of tracks and the acquisitive information for specifying inter-track boundaries, and proceeds to step SP102.

In step SP102 the record reproduce control section 31 compares the presumed number of tracks based on the information on the presumed number of tracks with the number of recording tracks based on the acquisitive information for specifying inter-track boundaries, thus judging whether or not the presumed number of tracks is smaller than the number of recording tracks.

An affirmative result, if obtained, in this step SP102, it indicates that the comparison of the signal level of the noise eliminated audio data D11 and the first level threshold value could detect presumed inter-track boundaries less than the inter-track boundaries for the number of recording tracks because the noise residing in the inter-track boundaries in the noise eliminated audio data D11 could not be eliminated completely, and then the process of moves to step SP73.

And, the record reproduce control section 31 repeats the processes of the steps SP101-SP102-SP73-SP74- SP75- SP76 in rotation until a negative result is acquired in step SP102 and step SP74, thus increasing the detected number of presumed inter-track boundaries in respect to the entire noise eliminated audio data.

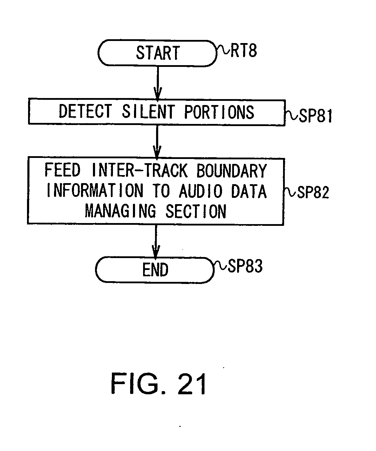

Incidentally, at this time the inter-track boundaries detecting section 37 conducts the retry process of inter-track boundaries detection described above referring to Fig. 21.

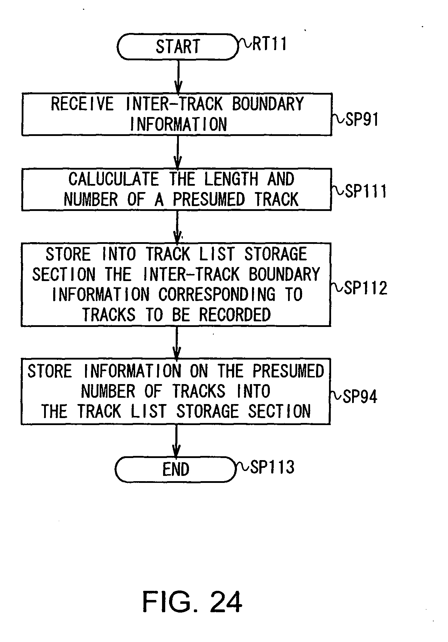

Also, the audio data managing section 34 performs the retry process for specifying inter-track boundaries using the acquisitive information for specifying inter-track boundaries, thus starting the retry procedure for specifying inter-track boundaries RT11 shown in Fig. 24 wherein the same reference numerals are assigned to the similar parts in Fig. 22, beginning with the start step, and the operation goes forward to step SP91.

In step SP91 the audio data managing section 34 receives the inter-track boundary information supplied from the inter-track boundaries detecting section 37, and the operation moves on to step SP111.

In step SP111 the audio data managing section 34 calculates the presumed track playing time of the presumed track just behind the resumed inter-track boundary based on the recording start time or the end time based on the inter-track boundary information and the start time of the inter-track boundary based on the inter-track boundary information as well as the track number showing on what ordinal position the presumed track stays counting from the recording start time, and the operation proceeds to step SP112.

In step SP112 the audio data managing section 34 reads the acquisitive information for specifying inter-track boundaries from the track list storage section 36, and calculates an error value in the playing time out of the playing time of the corresponding track number based on the acquisitive information for specifying inter-track boundaries and the playing time of the presumed track, and the calculated error value in the playing time is compared with the error threshold value, based on the result of which it is judged that a presumed track whose error value in the playing time is smaller than the error threshold value is a track to be recorded.

Then, the audio data managing section 34 specifies as the legitimate inter-track boundary the presumed inter-track boundary coming immediately after the presumed track judged as a track to be recorded, and lets the track list storage section 36 store the inter-track boundary information on the presumed inter-track boundary specified, and the operation proceeds to step SP94.

Thus, after performing the process in the step SP94, the operation of the audio data managing section 34 goes forward to step SP113, terminating the retry procedure for specifying inter-track boundaries RT11.

If a negative result is acquired in step SP102 (Fig. 23), it indicates, for example, that the same number of presumed inter-track boundaries as the number of the inter-track boundaries for the number of recording tracks has been properly detected because the extent of noise elimination with respect to the noise eliminated audio data D11 was just appropriate, or that the presumed inter-track boundaries have been detected by judging portions more than the inter-track boundaries for the number of recording tracks as silent portions because the level threshold value was made too large due to retry of inter-track boundary detection, and then the record reproduce control section 31 proceeds to step SP103.

In step SP103, the record reproduce control section 31 judges whether or not the presumed number of tracks is larger than the number of recording tracks by comparing the presumed number of tracks based on the up-to-date information on the presumed number of tracks (that is, in case of inter-track boundaries detection having been never retried, the information on the presumed number of tracks stored into the track list storage section 36 in recording analog audio signals, and in case of inter-track boundaries detection having been retried, the information on the presumed number of tracks stored into the track list storage section 36 at the last retry.) with the number of recording tracks based on the acquisitive information for specifying inter-track boundaries.

If an affirmative result is obtained in this step SP103, it indicates that presumed inter-track boundaries more than the inter-track boundaries for the number of recording tracks have been detected due to retry of inter-track boundary detection, and the record reproduce control section 31 moves to step SP78.

Here, the audio data managing section 34 attaches reliability information in terms of an error value in the playing time of the preceding presumed track, which indicates the extent of the sameness of individual tracks as the legitimate tracks, to each of all the presumed inter-track boundaries detected for a period from the inter-track boundaries detection at the time of recording analog audio signals until the last retry of the inter-track boundaries detection.

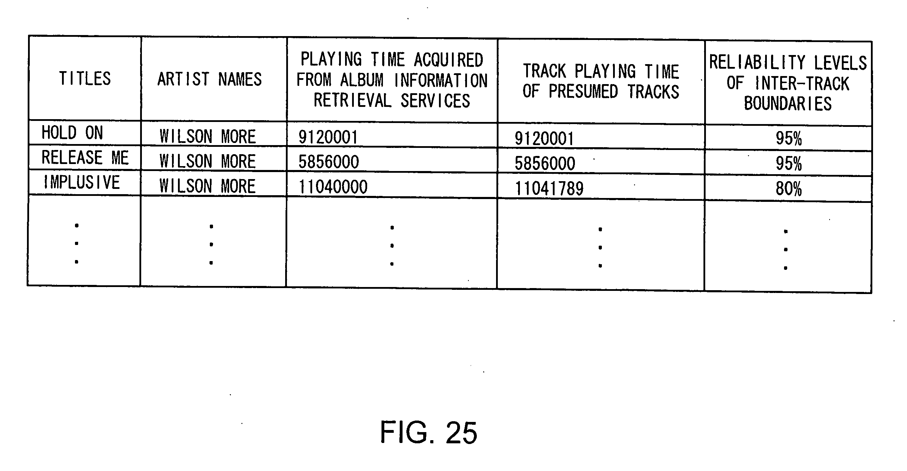

That is, as shown in Fig. 25, the audio data managing section 34 confers the highest level of reliability on a presume inter-track boundary following the preceding presumed track whose error value in the playing time is the smallest because it is the highest possible that this presumed inter-track boundary divides presumed tracks properly, and lower levels of reliability on the other presumed inter-track boundaries as an error value in the playing time gets larger because the larger the error value in the playing time of the presumed track immediately following each presumed inter-track boundary the lower the possibility of the presumed track being properly divided due to the deviation from the legitimate inter-track boundary.

Accordingly, in step SP78 the record reproduce control section 31 makes a list of reliability levels by taking in the information of reliability of all the inter-track boundaries from the audio data managing section 34, subsequently performing the process in step SP79 and proceeding to step SP104, where the final inter-track boundaries specifying procedure RT10 is terminated.

Meantime, if a negative result is acquired in step SP103, in indicates that the same number of presumed inter-track boundaries as the inter-track boundaries for the number of recording tracks has been properly detected, and then the record reproduce control section 31 specifies as the legitimate inter-track boundaries the inter-track boundary information, as is, of the same number of presumed inter-track boundaries as the number of recording tracks, and after the inter-track boundary information on the specified inter-track boundaries is reflected in automatically divining the track described above in reference to Fig. 11B, the operation goes forward to step SP104.

In this mode for carrying out the invention, the record reproduce control section 31 reflects in the automatic dividing of the track described above in reference to Fig. 11B the inter-track boundary information of the presumed inter-track boundaries specified by the audio data managing section 34, simultaneously performing the recording process to analog audio signals, thereby the segment 74 is divided into tracks with boundary marks 72 added to the boundary marks display area 73 on the track panel 70 (Fig. 10) through the GUI section 30 in a way to indicate the end time based on the inter-track boundary information.

Also, when the recording of analog audio signals ends automatically, the record reproduce control section 31 divides a segment 74 with the GUI section 30 into a track of the last piece of music and a track of a silent portion following the last track with a boundary mark 72 attached to the boundary mark display area 73 so as to show the end time of the last track.

Therefore, although in case the recording of analog audio signals is stopped manually, it may be rather hard to ascertain if the recording end time is the end time of the last track because it depends upon the input timing when the user enters a recording stop command, however, in case the recording of analog audio signals is stopped automatically, the record reproduce control section 31 can properly detect the end time of the last track, which can be shown to the user clearly, controlling the last track divided by the end time.

In case of recording other analog audio signals in a manner to be connected to the preceding analog audio signals after the end of the recording, an inter-track boundary can be put in as a track of a silent portion between two kinds of audio data corresponding to these analog audio signals, thus the record reproduce control section 31 can divides the track clearly at the connecting point of the two kinds of audio data.

Incidentally, in case the recording of analog audio signals ends automatically, the record reproduce control section 31 makes a display state (for example, color) of the track of a silent portion following the last track differ from the state of other tracks, thus letting the user be clearly notified of the end time of the last tract and that there exists a track of a silent portion at the end of the segment 74.

When a presumed inter-track boundary different from one in process of recording is specified as the legitimate inter-track boundary as a result of performing the processes for finally specifying inter-track boundaries described above in reference to Figs. 20 and 23 after the recording of analog audio signals ends, the record reproduce control section 31 has the inter-track boundary information on the specified inter-track boundary reflected newly in the automatic division of the tracks described above referring to Fig. 11B, thereby the tracks are to re-divided by the GUI section 30 out of the segment 74 with a boundary mark 72 automatically attached to the boundary mark display area 73.

In this manner, in case of the automatic marking function set to be effective, the record reproduce control section 31 is designed to be capable of dividing tracks in the unit of a piece of music out of the segments 74 without annoying the user.

In the above structure, the personal computer 1 operates such that at the time of recording analog audio signals, while storing audio data generated by digitally converting analog audio signals as an audio data file Mf in the hard disk drive 19 (steps SP21 to SP27, SP31 and SP32), a portion through which a signal level lower than a first level threshold value continues longer than an inter-track boundary detection time is detected as a presumed inter-track boundary of a silent portion in the noise eliminated audio data D11 generated by performing a noise eliminating process to the audio data (steps SP41 to SP48), that it is specified using inter-track boundary specifying information whether or not a detected presumed inter-track boundary is the legitimate inter-track boundary (steps SP34 to SP36, and steps SP34 to SP62), and that the recording and reproducing of the audio data is controlled by the unit of a track using the inter-track boundary information on the presumed inter-track boundary specified as the legitimate inter-track boundary out of the all the re-detected presumed inter-track boundaries (step SP37).

Also, the personal computer 1 operates such that in case the number of presumed inter-track boundaries specified at the time of recording is smaller than the number of legitimate inter-track boundaries after the end of the recording of analog audio signals, inter-track boundary detection will be retried to detect presumed inter-track boundaries (steps SP71 to SP76, step SP101 to SP76, steps SP81 and SP82, steps SP91 to SP94), that it is specified again using the inter-track boundaries specifying information whether or not the re-detected presumed inter-track boundaries are the legitimate inter-track boundaries (steps SP77 to SP79, steps SP103 to SP79), and that the recording and reproducing of audio data is controlled by the unit of a track using the inter-track boundary information on the presumed inter-track boundary specified as the legitimate inter-track boundaries out of the all the re-detected presumed inter-track boundaries.

Accordingly, the personal computer 1 can properly detect inter-track boundaries of music based on analog audio signals not only because inter-track boundaries are simply detected in the noise eliminated audio data D11 but because it is specified with inter-track boundaries specifying information whether or not the detected presumed inter-track boundaries are the legitimate inter-track boundaries.

According to the above structure, with a noise eliminating process performed to audio data generated by digitally converting analog audio signals to be recorded, presumed inter-track boundaries of silent portions without music are detected in the acquired noise eliminated audio data, and out of the detected presumed inter-track boundaries legitimate inter-track boundaries are specified with inter-track boundaries specifying information, which makes it possible to properly detect inter-track boundaries of silent portions of music based on analog audio signals keeping the influence of noise to a minimum, thereby successfully realizing personal computers capable of increasing the accuracy of detecting inter-track boundaries of a plurality of pieces of music based on analog audio signals.

Meanwhile, if presumed inter-track boundaries are once detected, when the number of the detected presumed inter-track boundaries does not come up to the number of the inter-track boundaries that should be intrinsically detected, inter-track boundaries detection will be conducted again, and out of the presumed inter-track boundaries detected as a result of the retry legitimate inter-track boundaries are specified again using the inter-track boundaries specifying information, resulting in successfully further increasing the accuracy of detecting inter-track boundaries of a plurality of pieces of music based on analog audio signals.

Further, as a result of conducting retry of inter-track boundaries detection, when more presumed inter-track boundaries are detected than the number of legitimate inter-track boundaries, the priority order is given to all the detected presumed inter-track boundaries according to the reliability levels in accordance with the inter-track boundaries specifying information, so that the same number of presumed inter-track boundaries as the inter-track boundaries to be intrinsically detected, on the order of presumed inter-track boundaries of higher degrees of priority, will be sequentially specified as the legitimate inter-track boundaries, thereby it is possible to prevent the accuracy of detecting inter-track boundaries from decreasing even when the number of presumed inter-track boundaries is detected that is larger than the number of inter-track boundaries that should be intrinsically detected by retry of inter-track boundaries detection.

### (4) Other Modes for Carrying Out the Invention

In the above mode for carrying out the invention, explanation is give on the case wherein in detecting inter-track boundaries the inter-track boundaries specifying information consisting of the number of recording tracks, the greatest playing time and the minimum playing time is used as the inter-track boundaries specifying input information, and the inter-track boundaries specifying information consisting of the number of recording tracks and the playing time of each track as the acquisitive information for specifying inter-track boundaries, however, the present invention is not limited to this, and in detecting inter-track boundaries the inter-track boundaries specifying information consisting of the number of recording tracks and the playing time of each track may be used as the inter-track boundaries specifying input information as well as the inter-track boundaries specifying information composed of the number of recording tracks, the greatest playing time and the minimum playing time as the acquisitive information for specifying inter-track boundaries.

Also, in the above mode for carrying out the invention, explanation is given on the case wherein inter-track boundaries are detected in recording analog audio signals to be supplied from analog audio equipment, however, the present invention is not limited to this, and inter-track boundaries may be detected in recording analog audio signals of a plurality of tracks of music to be supplied through the microphone 6.

Furthermore, in the above mode for carrying out the invention, explanation is given on the case wherein the process for finally specifying inter-track boundaries is performed after the recording of analog audio signals ends, however, the present invention is not limited to this, and the process for finally specifying inter-track boundaries may be performed in recording analog audio signals.

Furthermore, in the above mode for carrying out the invention, explanation is given on the case wherein when the number of presumed tracks is greater than the number of recording tracks in the final inter-track boundaries specifying procedure RT10 described above in Fig. 23, reliability information is conferred according to an error value in the playing time of a presumed track immediately following a presumed inter-track boundary, however, the present invention is not limited to this, and as a presumed inter-track boundary is connected with a presumed track both in front of and behind it, the highest level of reliability is conferred on a presumed inter-track boundary whose simple mean value or weighed mean value of error values in the playing time of the two tracks, each in front and behind is the smallest because it is the highest possible that this inter-track boundary is the boundary that may divide two tracks to be recorded, each in front and behind it, and lower levels of reliability on inter-track boundaries, each of whose simple mean value or weighed mean value of error values in the playing time of the two tracks, each in front and behind is larger because it is highly possible that they are deviated from legitimate inter-track boundaries.

Furthermore, in the above mode for carrying out the invention, explanation is given on the case wherein an inter-track boundaries detection program employing the present invention is applied to a record edit managing program stored in advance in the hard disk drive 19 of the personal computer 1, and according to this record edit managing program, the following procedures described above with reference to Figs. 14 to 25 are performed: the recording procedure RT2, the inter-track boundaries specifying procedures RT3 and RT6, the inter-track boundaries detecting procedure RT4, the information acquisitive procedure for specifying inter-track boundaries RT5, the final inter-track boundaries specifying procedures RT7 and RT10, the inter-track boundaries detection retry procedure RT8, and the inter-track boundaries specifying retry procedures RT9 and RT11; however, the present invention is not limited to it, and the recording procedure RT2, the inter-track boundaries specifying procedures RT3 and RT6, the inter-track boundaries detecting procedure RT4, the information acquisitive procedure for specifying inter-track boundaries RT5, the final inter-track boundaries specifying procedures RT7 and RT10, the inter-track boundaries detection retry procedure RT8, and the inter-track boundaries specifying retry procedures RT9 and RT11 may be performed by installing the record edit managing program on the personal computer 1 utilizing wired and radio communications media such as local area networks and the Internet, and digital satellite broadcast, and, too, the recording procedure RT2, the inter-track boundaries specifying procedures RT3 and RT6, the inter-track boundaries detecting procedure RT4, the information acquisitive procedure for specifying inter-track boundaries RT5, the final inter-track boundaries specifying procedures RT7 and RT10, the inter-track boundaries detection retry procedure RT8, and the inter-track boundaries specifying retry procedures RT9 and RT11 may be performed by installing program storage media storing the record edit managing program on the personal computer 1.

Incidentally, not only package media such as, for example, the flexible disk, compact disc-read only memory (CD-ROM), and digital versatile disc (DVD) but semiconductors and magnetic discs temporarily or permanently storing the record edit managing program, may be used as program storage media storing the record edit managing program that may be installed on the personal computer 1 in order to execute the aforementioned recording procedure RT2, the inter-track boundaries specifying procedures RT3 and RT6, the inter-track boundaries detecting procedure RT4, the information acquisitive procedure for specifying inter-track boundaries RT5, the final inter-track boundaries specifying procedures RT7 and RT10, the inter-track boundaries detection retry procedure RT8, and the inter-track boundaries specifying retry procedures RT9 and RT11. As well, as means for storing the record edit managing program into these program storage media, wired and radio communications media such as local area networks and the Internet, and digital satellite broadcast may be used, and besides the storing may be conducted via a variety of communications interfaces such as routers and modems.

Furthermore, in the above mode for carrying out the invention, explanation is given on the case wherein an information processing apparatus for detecting inter-track boundaries employing the present invention is applied to the personal computer 1 described above with reference to Figs. 1 to 25, however, the present invention is not limited to it, and may be applied widely to a variety of other inter-track boundaries detecting devices such as the personal digital assistance (PDA) and digital audio equipment.

Furthermore, in the above mode for carrying out the invention, explanation is given on the case wherein the CPU 11 described above with reference to Figs. 1 to 25, is applied as noise eliminating means for generating noise eliminated audio data by performing a noise eliminating process to audio data generated by digitally converting analog audio signals of music whose inter-track boundaries among a plurality of tracks are produced of silent portions, however, the present invention is not limited to it, and various other kinds of noise eliminating means may be widely applied, such as noise eliminating circuits exclusive to noise elimination.

Furthermore, in the above mode for carrying out the invention, explanation is given on the case wherein the CPU 11 described above with reference to Figs. 1 to 25 is applied as the presumed inter-track boundaries detecting means for detecting presumed inter-track boundaries presumed to be the inter-track boundaries of a plurality of tracks based on portions whose signal levels of noise eliminating audio data are lower than a predetermined level threshold value, however, the present invention is not limited to this, and other various kinds of presumed inter-track boundaries detecting means may be widely applied, such as presumed inter-track boundaries detecting circuits exclusive to presumed inter-track boundaries detection.

Furthermore, in the above mode for carrying out the invention, explanation is given on the case wherein the CPU 11 described above with reference to Figs. 1 to 25 is applied as the presumed inter-track boundaries specifying means for specifying presumed inter-track boundaries out of the presumed inter-track boundaries detected by the presumed inter-track boundaries detecting means based on the inter-track boundaries specifying information, but the present invention is not limited to this, and a wide variety of other inter-track boundaries specifying means may be applied, such as inter-track boundaries specifying circuits exclusive to specifying inter-track boundaries.

According to the present invention described above, noise eliminated audio data is generated by performing a noise eliminating process to audio data generated by digitally converting analog audio signals of music whose inter-track boundaries of a plurality of tracks are produced of silent portions, and based on portions of the generated noise eliminated audio data whose signal levels are lower than a predetermined level threshold value, presumed inter-track boundaries presumed to be the inter-track boundaries of a plurality of tracks are detected, and again based on the inter-track boundaries specifying information inter-track boundaries are specified out of the detected presumed inter-track boundaries, whereby it is made possible to properly detect the inter-track boundaries of silent portions of music of a plurality of tracks based on the analog audio signals keeping the influence of noise to a minimum, thus realizing an information processing apparatus for detecting inter-track boundaries capable of increasing the accuracy of detecting the inter-track boundaries of music of a plurality of tracks based on analog audio signals.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. An information processing apparatus for detecting inter-track boundaries, comprising:
noise eliminating means for generating noise eliminated audio data by performing a noise eliminating process to audio data generated by digitally converting analog audio signals of music of a plurality of tracks whose inter-track boundaries are produced of silent portions;
presumed inter-track boundaries detecting means for detecting presumed inter-track boundaries presumed to be the inter-track boundaries for said plurality of tracks based on the portions of said noise eliminated audio data whose signal levels are lower than a predetermined level threshold value; and
inter-track boundaries specifying means for specifying said inter-track boundaries based on the inter-track boundaries specifying information of said presumed inter-track boundaries detected by said presumed inter-track boundaries detecting means.

2. The information processing apparatus according to Claim 1, wherein
said inter-track boundaries specifying means specifies as said inter-track boundaries said presumed inter-track boundaries dividing said presumed tracks whose presumed track playing times of presumed tracks presumed to be tracks divided by said inter-track boundaries are greater than said minimum playing time and smaller than said greatest playing time, using the minimum playing time and the greatest playing time of said plurality of tracks as said inter-track boundaries specifying information.

3. The information processing apparatus according to Claim 1, wherein
said inter-track boundaries specifying means presumes said presumed inter-track boundaries as said inter-track boundaries based on an error between the presumed track playing time of presumed tracks presumed to be tracks divided by said presumed inter-track boundaries and said playing time, using the playing time of each of said plurality of tracks as said inter-track boundaries specifying information.

4. The information processing apparatus according to Claim 1, wherein:
said inter-track boundaries specifying means compares the number of presumed tracks for the presumed tracks presumed to be tracks divided by said presumed inter-track boundaries detected by said presumed inter-track boundaries detecting means with said number of tracks, using the number of tracks of said plurality of tracks as said inter-track boundaries specifying information; and
said presumed track number detecting means, in case the number of said presumed tracks is smaller than the number of said tracks, according to the results of said comparison by said inter-track boundaries specifying means, tries to detect once more said presumed inter-track boundaries based on the portions of said noise eliminated audio data whose signal levels are lower than the other level threshold values greater than said level threshold value,.

5. An information processing method for detecting inter-track boundaries, comprising:
the noise eliminating step of generating noise eliminated audio data by performing a noise eliminating process to audio data generated by digitally converting analog audio signals of music of a plurality of tracks whose inter-track boundaries are produced of silent portions;
the presumed inter-track boundaries detecting step of detecting presumed inter-track boundaries presumed to be the inter-track boundaries for said plurality of tracks based on the portions of said noise eliminated audio data whose signal levels are lower than a predetermined level threshold value; and
the inter-track boundaries specifying step of specifying said inter-track boundaries based on the inter-track boundaries specifying information of said detected presumed inter-track boundaries detected.

6. An information processing program to detect inter-track boundaries, the program causing a computer to perform:
the noise eliminating step of generating noise eliminated audio data by performing a noise eliminating process to audio data generated by digitally converting analog audio signals of music of a plurality of tracks whose inter-track boundaries are produced of silent portions;
the presumed inter-track boundaries detecting step of detecting presumed inter-track boundaries presumed to be the inter-track boundaries for said plurality of tracks based on the portions of said noise eliminated audio data whose signal levels are lower than a predetermined level threshold value; and
the inter-track boundaries specifying step of specifying said inter-track boundaries based on the inter-track boundaries specifying information of said detected presumed inter-track boundaries detected.
